# EUROPEAN PATENT SPECIFICATION

(11) **EP 3 027 913 B1**
(45) Date of publication and mention of the grant of the patent: **24.07.2019**
(21) Application number: 14752651.1
(22) Date of filing: 01.08.2014
(51) Int. Cl.: F16B 11/00, B29C 65/48

(54) **FIXINGS**
BEFESTIGUNGSSYSTEM
SYSTÈME DE FIXATION

(30) Priority: 02.08.2013 GB 201313905
(43) Date of publication of application: 08.06.2016
(73) Proprietor: Wood, Colin Leslie Hearl, New Milton, Hampshire BH25 5HD (GB)
(72) Inventor: Wood, Colin Leslie Hearl, New Milton, Hampshire BH25 5HD (GB)
(74) Representative: Barker Brettell LLP
(86) International application number: PCT/GB2014/052376
(87) International publication number: WO 2015/015224

(56) References cited:
- WO-A1-2006/032954
- WO-A1-2010/057881
- US-A- 4 842 912

## Description

### Field of the Invention

The present invention relates to fixings, and in particular to fixings arranged to be attached to a substrate for fixing things to the substrate.

### Background to the Invention

Many fixings exist for fixing or fastening one fixed-part to another. The terms "fixing" and "fastening" are used synonymously in many circumstances. For instance, nails, rivets, self-tapping screws and nuts and bolts are all correctly described as fixings, as are shackles, hooks and ties. Some are single member fixings, e.g. nails and screws, and some are pairs of complementary fixing members, e.g. nuts & bolts.

With advances in material technologies, there is an increasing need to fix a wide variety of items to substrates which can be made of many materials such as thermoplastics, thermosets, metals, lumber, concrete, composites, and laminates. It is therefore often required to attach the fixing to the substrate by means of adhesive, either when mounting the fixing on the surface of the substrate, or when building the fixing into the substrate for example if it is laminar.

Devices do exist in which a first fixing member is attached by adhesive to one substrate or first fixed part and a second fixed part is fixed or fastened to the first fixed part by means of a second fixing member which is complementary to the first, for example in a male/female manner. The two fixing members may act by gripping the second fixed part between them; whilst the first fixing member is retained by the adhesive acting in tension if and when the two fixed parts are pulled apart. However the fixing may operate in any other manner. In this specification, we refer to such a device as a "dual mode fixing".

We define an adherable dual-mode fixing as a fixing or fastener having: a base fixing member adapted to be adhesively attached to one fixed part, which fixed part can also be referred to as a substrate and; another fixing member being complementary to the base fixing member to fix another fixed part with respect to the one fixed part.

The base fixing member may be mounted on a surface of the one fixed part facing the other fixed part in use. Alternatively the base fixing member may be mounted on an opposite surface of the one fixed part from its surface facing the other fixed part in use. In other cases, the base fixing member may be within the one fixed part, for instance by lamination on both sides of the fixed-part.

Normally the base and other fixing-members are complementary in a male/female manner, for example in a threaded manner. However, a variety of alternatives are equally possible, such as the base member having a stem sized to receive fixing washer or apertured to receive a cable tie. Again the base fixing-member can be apertured elsewhere than on a stem.

It is known, for example from WO2010/057881 to bond adhesively fixings with large heads to substrates to which another part of an assembly is to be fixed. It is also known to bond such fixings into laminated structures, that is, composite structures made up of layers of lamination. However there are a number of problems with the use of adhesives in such systems. For example, the adhered surface of the fixing member is typically flat, and therefore generally parallel to the surface to which it is adhered. This tends to lead to a high concentration of tensile strain at the centre of the bonded surface. It also tends to result in the adhesive being compressed so that the polymer chains in the adhesive lie parallel to the adhered surfaces, which reduces tensile, peel, shear and cleavage strength of the bond.

US 4842912 A discloses a fixing having a base which is incorporated into a moulded laminate structure.

### Summary of the Invention

The invention is defined by the appended claims.

According to one aspect of the invention there is provided a fixing member comprising: a base for adhering to a substrate; and a fixing formation projecting from the top side of the base, and a plurality of reinforcing filaments incorporated in the base, wherein the reinforcing filaments extend beyond at least one edge of the base.

The fixing formation may be complementary to another fixing member of the fixing; the base having a concavity in its underside for accommodating adhesive for adhering it to the substrate part in use; and at least one stop on its underside for stopping its approach to the substrate, whereby on application of the base to the substrate with the interposition of adhesive therebetween, the adhesive will spread to a thickness determined, when the stop is in contact with the substrate, by the depth of the concavity, wherein the base comprises a fibrous reinforcing material.

Whilst it is envisaged that the concavity could be flat sided, as for instance a shallow cuboid, or formed of one or more flat surface and a simple curved surface, as in a shallow truncated cone; it is likely to be more complexly curved. By more complex curvature is envisaged continuous curvature in three dimensions over the great part of the surface of the concavity.

The concavity can be a single concavity or one of a plurality of concavities. For an exothermic curing adhesive spreading of it to a thickness determined by the depth of the concavity(s) allows control of the temperature rise in the adhesive, due to exothermic reaction on curing of the adhesive. Preferably the temperature rise is sufficient to enable the adhesive to optimise its cure cycle and glass transition temperature. Generally thermosetting adhesive provides a stronger bond, with full cross-linking/polymerisation, if it optimises its cure cycle and glass transition temperature. This promotes coherence, that is internal strength of the adhesive, and adherence, that is bonding to materials of parts to be bonded by the adhesive.

Whilst it can be envisaged, with a stop lip around the concavity(s) as well as a central stop, that the concavities could represent only 50% of the area of the underside of the base, preferably the concavity(s) will represent 75% of the area of the underside of the base. Indeed it is expected that normally the concavity(s) will represent at least 90% of that area.

It should be noted that the concavity depth is expected to be small. It can be envisaged to be as much as 3mm. However, it is expected that in most applications, 2mm will be the maximum depth. Normally the depth will be less than 1.0mm but seldom less than 0.1mm. Typically it is between 0.5mm and 0.15mm; preferably it is between 0.3mm and 0.2mm for two pack adhesives; although certain adhesives perform best with the concavity depth between 0.15mm and 0.10mm, at least under tensile and shear loads. Torsional and peel loads may require slightly thicker depths, typically 0.2mm for the same adhesive.

Normally the stop will be at the centre of the base. It may be a single spot or protrusion at the actual centre of the base from which the base curves in, or a series of spots or protrusion in a ring or indeed a continuous ring around the actual centre. A ring, of either form, provides more stable orientation of the fixing-member, i.e. with the base generally parallel to the surface of the substrate. Where a ring is provided, a further central concavity may be provided. This may have the same height as the other concavity(s). However, its depth may be less in view of the central ring being small. The area within the central ring can be between 5% and 20% of the area of the base. The central ring may be continuous or discontinuous.

The central spot or ring may be replaced by, or augmented with, one or more stop formations, for example ribs or ridges, arranged radially of the centre of the base. Again these may be continuous or discontinuous. Where these do not extend radially as far as the extent of the concavities, they do not divide the concavities into discrete regions. However, where they do extend this far, they do divide the base into discrete concavities. In order to facilitate complete filling of all such regions with adhesive, at least one discontinuity is preferably provided for flow of adhesive between neighbouring concavities.

Normally an at least substantially continuous region will be provided surrounding the concavity(s). This will normally be set back slightly, typically by 0.1mm or less from the stop, whereby adhesive is present between the surrounding region and the substrate, with the stop(s) in contact with the substrate.

Outwards of the surrounding region, a peripheral margin, still part of the base, can be provided. Normally the peripheral margin will be plane. The surrounding region will have throttled the adhesive allowing air to escape from the concavity(s) as the adhesive spreads and for the adhesive to be present around all of the surrounding region whence it flows radially on final urging of the base fixing-member against the substrate.

The peripheral margin or any part of the base can have a series of apertures through it, whose cross sectional area can be nonlinear and increases towards the top side of the base for formation of a stud of adhesive both adhering the margin directly and holding the base by overlapping on the side remote from the substrate, providing over-hung attachment.

Alternatively, the apertures can be provided in the concavity(s).

Flow of adhesive out of these apertures - as opposed to outwards to the edge of the margin - can be restrained. This is possible by incorporation of a flow inhibiting reinforcement textile or metallic mesh in the peripheral margin, or arranging an abutment over the peripheral margin to control overflow from the apertures.

The apertures can extend with greater radial extent than angular extent (that is radial with respect to the base and angular in the direction around the centre of the base). Nevertheless it is expected that with a sufficient excess of suitable exothermic adhesive, the adhesive will flow to the outer edge of the peripheral region before flowing appreciably through the apertures. As the fixing-member is urged towards the one fixed-part to regulate the thickness of the adhesive, its viscosity will cause a rise in pressure within it, without it all escaping radially. The rise in pressure will cause the adhesive to well up through the apertures.

In certain embodiments, it may be advantageous to provide degassing channels extending from the concavities radially past the surrounding region and the peripheral margin. These channels are expected to be small in comparison with the overall throttled gap at the surrounding region to allow flow of adhesive, heated on curing, and gas with reduced viscosity at elevated temperature.

Whilst it can be envisaged that the entire base fixing-member including the base can be formed integrally of one material, typically a moulded polymer material, possibly with chopped fibre reinforcement, the base can be formed separately from the fixing formation, which can be formed as a core located in a central aperture through a base member which forms the base, and typically formed of steel, whereby it can be threaded for its co-operation with the other fixing-member. Other metals can be used and indeed polymeric materials can be used for the fixing formation. Particularly where the stop formations are angularly distributed arranged around the centre of the fixing-member, as in a ring or a series of radial formations, they contribute to ensure that the base is adhered generally parallel to the substrate with the fixing formation projecting, where it does this, normal to the substrate.

Normally the stop, as spot or ring, or other stop formations will be provided in the core, with the concavities being partially in the core and partially in the base member, which includes the surrounding region.

Normally, the base member will overlap the core inwardly on the sides thereof away from the concavity(s), for the mechanical attachment, at least prior to adhesive attachment.

Conveniently, the core and the base member will be united, either by the core having been an insert in the base member during moulding of the base member, or by welding of the base member is of metal.

The reinforcing filaments may form a fibrous reinforcing material, which may comprise a reinforcement sheet. This may be flexible. It may be in the form of a ribbon. It may be arranged for stress dissipation. The reinforcement sheet may extend across the apertures through the base. Not only does this reinforce the fixing member and aid adherence where the adhesive permeates textile crossing the apertures, it can extend substantially beyond at least one edge of the base, for direct adherence of the textile reinforcement to the surrounding substrate to which the fixing member is being adhered. The filaments of which the reinforcement sheet are made up may each extend beyond the edge of the base, at one or preferably both, ends of the filament. The further it is extended into the substrate the greater its impact of its stress dissipation abilities. One or more layers of reinforcement material may be interleaved with surrounding laminate of the substrate which further increases the stress dissipation. This can reduce the number of layers of surrounding laminate that are required to withstand a given load as the stress is dissipated over a larger area of the substrate. The fibrous material of the reinforcement sheet can be of carbon based material, glass or other mineral based material, or indeed polymeric or metallic material.

The attachment of the fixing member to the substrate may include further attachment of the extending textile to the substrate, for example by stitching or riveting after the fixing member has been adhered in place.

The fibrous reinforcement sheet may extend out of the base laterally, or vertically, or indeed in any suitable direction depending on the shape of the substrate and the fixed part.

The at least one stop may comprise at least part of a rim which forms the edge of the concavity. This applies to all of the aspects of the invention, as do the following statements.

The at least one stop may comprise a projection from the underside of the base within the concavity. The base may have at least one aperture therethrough, through which adhesive can flow out of the concavity. The at least one aperture may have a cross sectional area that increases towards the upper side of the base so that a core of adhesive can form within the aperture also having a cross sectional area that increases in the upward direction.

The base may have outward projections or inwards recesses in its outer edge arranged to engage with adhesive to resist rotation of the fixing on the substrate. The base may comprise a central part and a base extension extending outwards from the central part. The base may comprise a reinforcing material, which may be fibrous, for example of textile or wire mesh. The reinforcing material may be formed as a sheet and the base may further comprise a rigid base member over which the reinforcing material can be laid. The sheet of reinforcing material may comprise a plurality of substantially straight filaments extending parallel to each other, with an aperture therethrough where the filaments around the aperture follow a curved path around the aperture.

The reinforcing material may further comprise a binder holding the filaments in position. The binder may be thermoplastic whereby the binder can be heated to allow relative movement of the filaments to form the aperture.

The reinforcing filaments may extend axially along the fixing formation and radially out through the base.

The fixing member may further comprise a further fixing formation on the base.

The base may have fibres embedded therein and the ends of the fibres project from the surface of the base. This can help to enhance the adhesive bonding between the base and the substrate, if on the underside of the base, or between the base and any material over-moulded onto the base if on the top side of the base.

The fixing member may further comprise a strain gauge arranged to generate a signal indicative of the level of strain within the fixing member.

At least a part of the base may be formed of metal and have a grit blasted surface.

The base of the fixing member may have a roughened surface with a plurality of recesses formed therein. The recesses may have overhanging or undercut sides.

The present invention further provides a method of adhering a fixing to a substrate, the method comprising: providing a fixing member according to the invention placing adhesive between the underside of the base and the substrate, and curing the adhesive.

If the base has fibres therein which project from the surface, the fibres act to increase the surface area of the base which the adhesive can come into contact with, thereby strengthening the bond.

The method may further comprise placing a flexible material over the fixing and placing a moulding member over the flexible material to shape the flexible material, and hardening the flexible material to form a mounting surface onto which a part can be fixed by the fixing. The base may have apertures through it and the flexible material may be hardened using adhesive which has moved from the underside of the base through the apertures.

Whilst it is expected that the majority of the applications of the fixings of the invention will be with the fixing member adhered to the substrate part with applied adhesive, it is also envisaged that a significant minority will involve adhering during the process of formation of the substrate part. This can be either during manual lay-up of a laminated part or placing the fixing member in a mould as an insert prior to vacuum and injection moulding of the substrate part.

The fixing member may comprise, in any combination, any one or more features of the embodiments of the invention which will now be described by way of example only with reference to the accompanying drawings.

### Brief Description of the Drawings

**Figure 1** is a perspective view of a base fixing member forming part of a fixing in accordance with the invention;
**Figure 2** is a side view of the two fixing members of a fixing, of which the base fixing-member is shown in Figure 1, fixing two fixed parts together;
**Figure 3** is a central cross-sectional view of the base fixing member of Figure 1;
**Figure 4** is a similar view to Figure 3 with an excess of the adhesive applied to the base;
**Figure 5** is a similar view of the base fixing member applied and adhered to one of the fixed-parts;
**Figure 6** is a perspective view of the base fixing member forming part of a second adherable fixing according to the invention;
**Figure 7** is a top view of the base fixing member of Figure 6;
**Figure 8** is an underside view of the base fixing member of Figure 6;
**Figure 9** is a central, cross-sectional side view on the line IX-IX in Figure 8 of the fixing member of Figure 6;
**Figure 10** is a similar cross-sectional view on the line X-X;
**Figure 11** is a view similar to Figure 10 of the fixing member adhered to one fixed-part;
**Figure 12** is a side view of the base fixing member forming part of a third fixing according
   to the invention;
**Figure 13** is a top view of the base fixing member of Figure 12;
**Figure 14** is an underneath view of the base fixing member of Figure 12;
**Figure 15** is a perspective view of the base fixing member of Figure 12;
**Figure 16** is a central, cross-sectional side view on the line XVI-XVI in Figure 14 of the fixing member of Figure 12, including reinforcement fabric in accordance with an embodiment of the invention;
**Figure 17** is a similar cross-sectional view on the line XVII-XVII;
**Figure 18** is an exploded view of a fixing according to a further embodiment of the invention;
**Figure 19** is a sectional view of the fixing of Figure 18 in a secured state;
**Figure 20** is a sectional view of parts of a fixing according to a further embodiment of the invention during assembly;
**Figure 21** is an enlargement of part of Figure 20 showing the sacrificial profile of the fixings before autogenous welding;
**Figure 22** is a sectional view of the fixing of Figure 20 after welding;
**Figure 23** is an enlargement of part of Figure 22 after autogenous welding;
**Figure 24** is a sectional view through a fixing according to a further embodiment of the invention including the parts of figures 20 to 23;
**Figure 25** is a perspective view of the fixing of Figure 24;
**Figure 26** is a sectional view through a fixing according to a further embodiment of the invention;
**Figure 27** is a perspective view of a fixing according to a further embodiment of the invention during assembly;
**Figure 28** is a schematic view of a reinforcing sheet forming part of a fixing according to a further embodiment of the invention;
**Figure 29** is an expanded view of a tool for forming a hole in the sheet of Figure 28;
**Figures 30a to 30d** show the operation of the tool of Figure 29;
**Figure 31** is a sectional view of a fixing according to a further embodiment of the invention;
**Figure 32** is a partly cut-away perspective view of a fixing according to a further embodiment of the invention;
**Figure 33** is perspective view of a fixing according to a further embodiment of the invention;
**Figure 34** is plot showing the surface shape of a fixing according to a further embodiment of the invention;
**Figure 35** is a plot similar to Figure 34 of a further embodiment of the invention;
**Figure 36** is a cross section through the fixing of Figure 35 when bonded to a substrate;
**Figure 37** is a section though a part of the fixing of Figure 35 when bonded to a substrate;
**Figure 38** is a schematic view showing a process of roughening a fixing according to an embodiment of the invention;
**Figure 39** is a section though a part of a fixing roughened by the process of Figure 38;
**Figure 40** is an enlargement of part of the fixing of Figure 39 showing recesses in the surface;
**Figure 41** is a view of a fixing according to an embodiment of the invention made tougher with a carbon fibre reinforcing material;
**Figure 42** is a section through the fixing and material of Figure 41 bonded to a substrate;
**Figure 43** is a perspective view of a vehicle body structure according to an embodiment of the invention;
**Figure 44** is an enlargement of part of Figure 44;
**Figures 44a, 44b and 44c** are perspective views of components of the fixings in the structure of Figure 43;

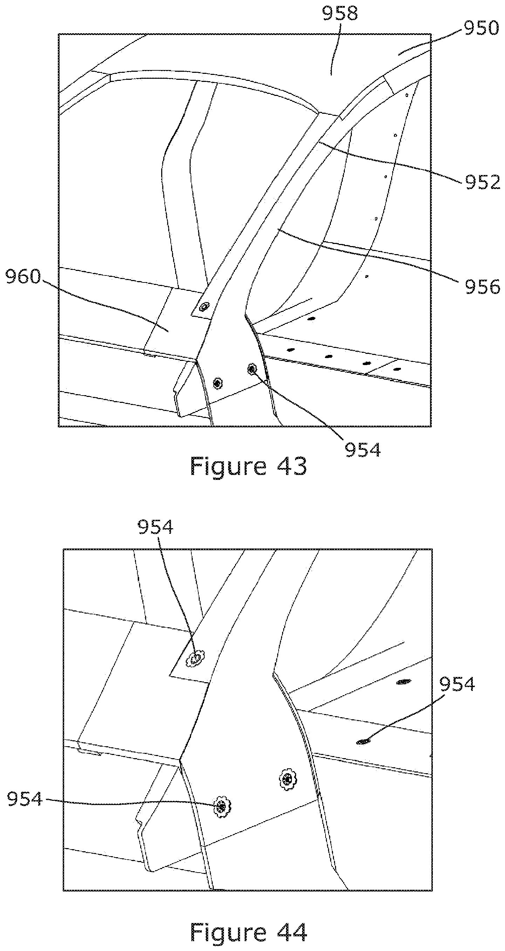

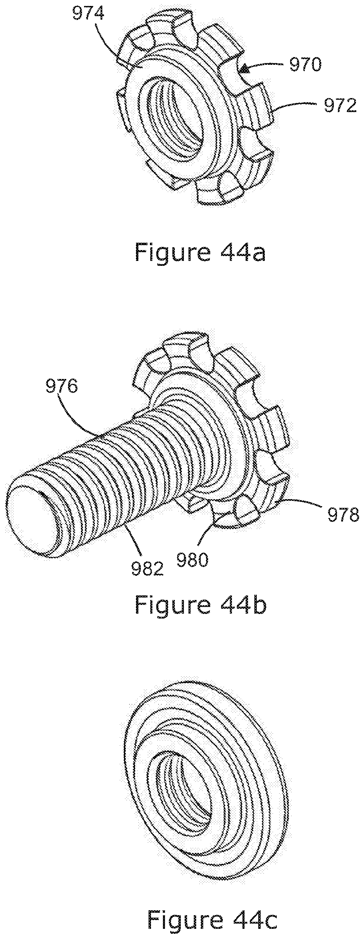

**Figures 44a, 44b and 44c** are perspective views of components of the fixings in the structure of Figure 43;

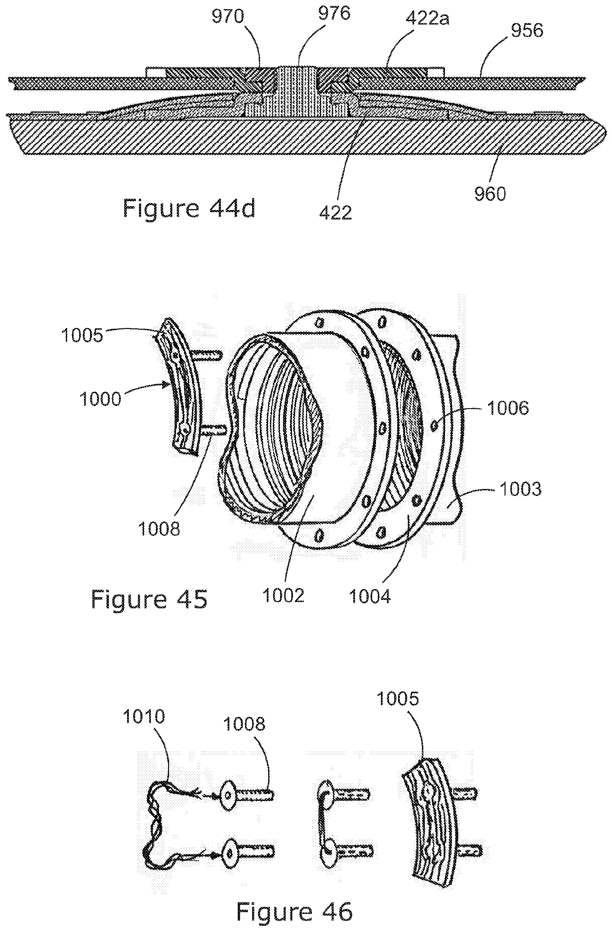

**Figure 44d** is a sectional view through one of the fixings of the structure of Figure 43;
**Figure 45** is a perspective view of a fixing for fixing piping sections which is not according to an embodiment of the invention;
**Figure 46** shows the formation of the fixing of Figure 45;

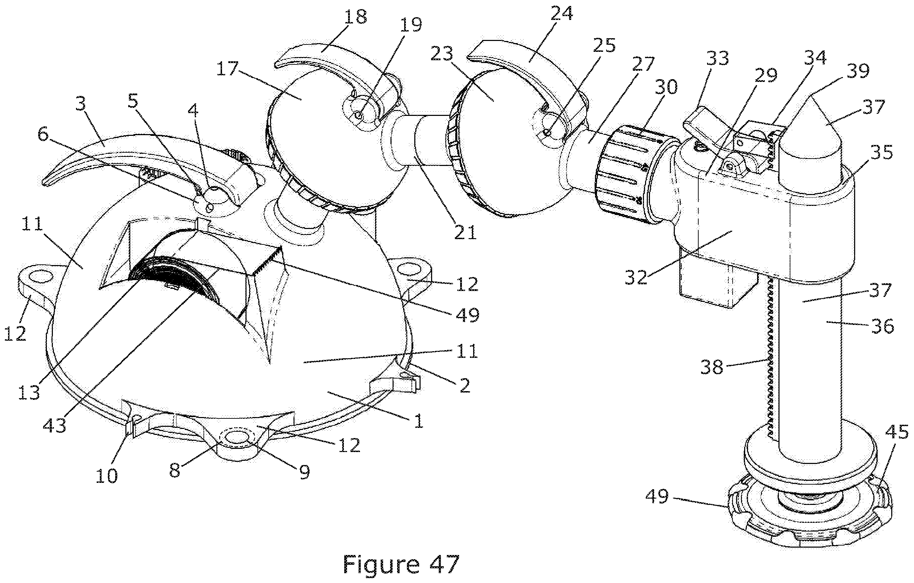

**Figure 47** is a perspective view of a locating tool for a fixing according to an embodiment of the invention;

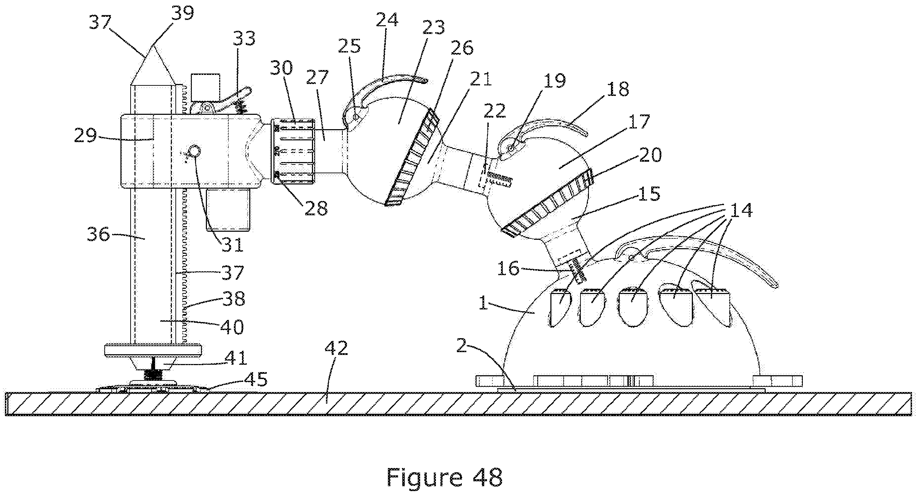

**Figure 48** is a section through the tool of Figure 47;

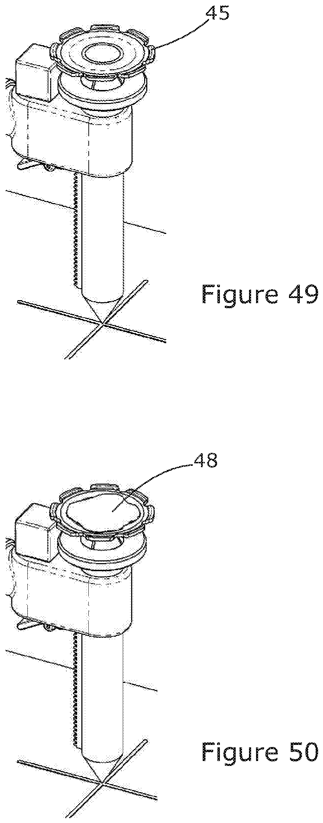

**Figures 49 and 50** show operation of the tool of Figure 47;

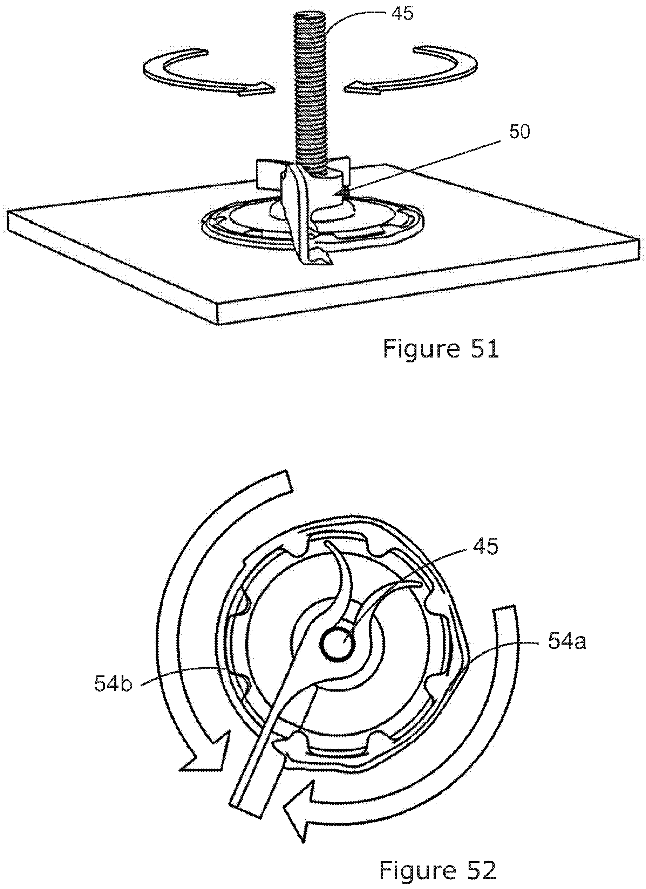

**Figure 51** shows a perspective view of a profiling tool fitted to a fixing according to an embodiment of the invention;
**Figure 52** shows a top view of the profiling tool of Figure 51 fitted to a fixing;

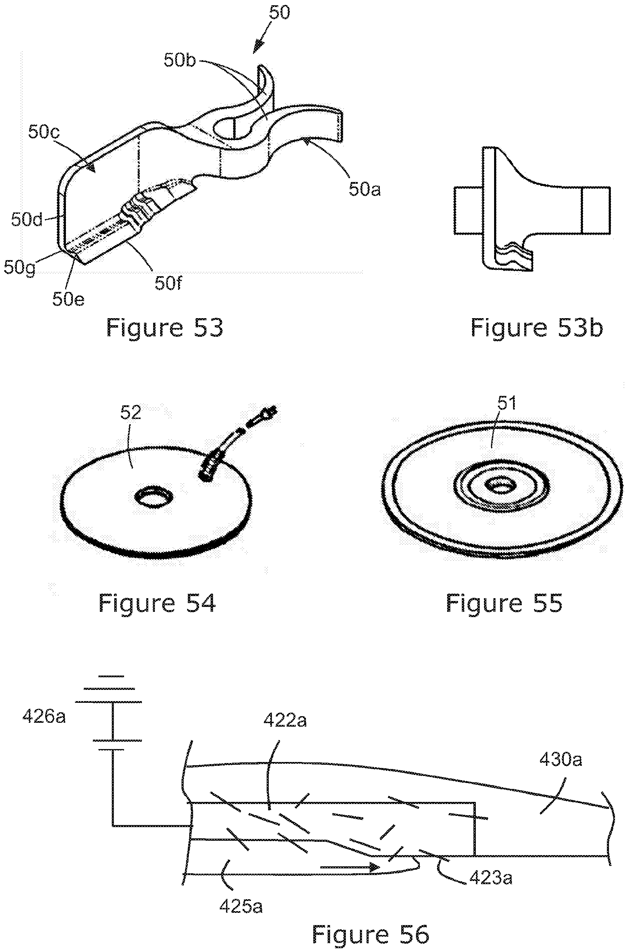

**Figure 53** shows a perspective view of the profiling tool of Figures 51 and 52;
**Figure 53b** shows and end view of the profiling tool of Figures 51 and 52;
**Figure 54** shows a heating element for use with fixing of Figure 51;
**Figure 55** shows a moulding clamp for use with the fixing of Figure 51; and
**Figure 56** shows part of a fixing according to a further embodiment of the invention.

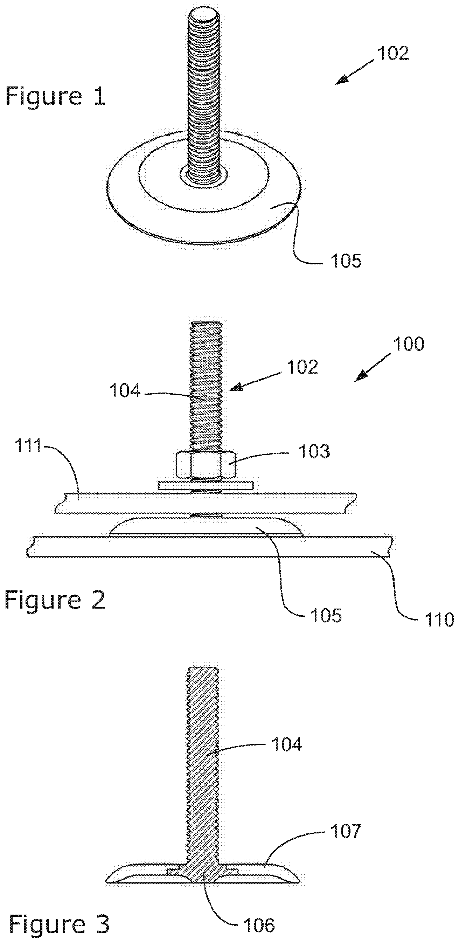

Referring to Figures 1 to 5 of the drawings, a fixing 100 comprises a first fixing member 102 and a second fixing-member 103. The first fixing member has a fixing formation in the form of a threaded stem 104 extending upwards from, and perpendicular to, the centre of the top surface of a disc-like base 105. The stem 104 and a central portion of the base 106 are cold formed, for example as a metallic forging, whilst the main part of the base is a polymer injection moulding 107. The stem 104 being threaded, the second fixing-member 103 is a nut.

In use the first fixing-member 102 is adhered to a first fixed part 110 which forms a substrate and a second fixed part 111 is fixed to the first by means of the nut 103 bearing against it with the stem 104 passing through it. The first and second fixed parts can be of a wide variety of materials and articles. They can be composite panels of an automobile or an aircraft or indeed metal panels of white goods. The side of the base which is adhered to the substrate is defined herein as the underside, and the opposite side that faces away from the substrate, as the top, or upper side, independently of the absolute orientation of the fixing.

The first or base fixing member on its underside has: a central stop 121 on the central longitudinal axis A of the stem; a concavity 123 in annular form around the stop 121, the concavity being a shallow dishing of the underside of the base 105; and a radiused rim 124 extending around the concavity at the edge of the base 105.

The stem is typically 20mm long and threaded M 10. The base is 50mm in diameter. The stop 121 is flat and perpendicular to the axis of the stem 104 and has a 5mm diameter, which forms the inner edge of the annular concavity 123. This extends to the radiused rim 124. In cross-section, on a section radial of the axis of the stem, the concavity has curved inner and outer bands 125, 126 and a flat central extent 127. The radius of curvature (in section) of the bands is half the radial extent of the concavity. However, the concavity is shallow such that the tangent to the curvature at the spot would make an angle of only a few degrees with the surface 128 of the stop 121, were it not for the fact that stop is blended into the curvature, and no sharp edges are present.

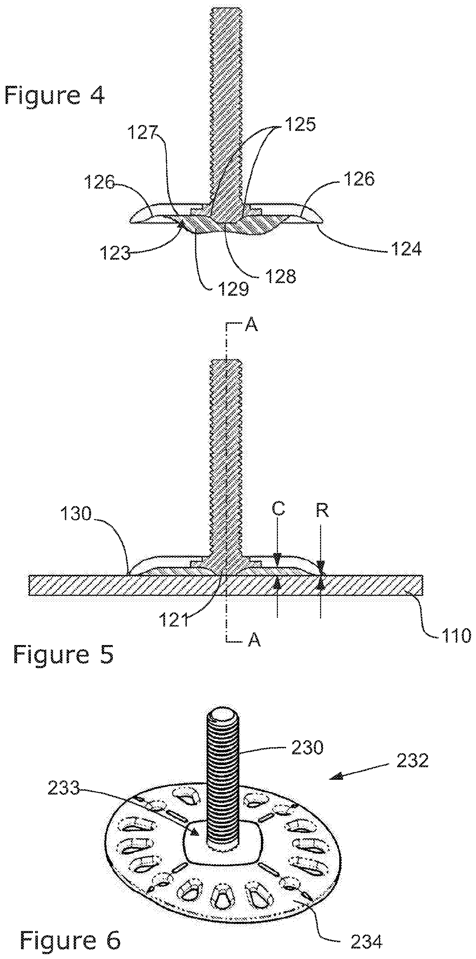

The underside of the rim 124 lies in a plane, and the depth of the concavity 123, i.e. the distance that it extends out of this plane, is 0.25mm in this embodiment, the dimension C in Figure 5. The radiused rim 124 is set 0.05mm above the underside of the central stop 121, the dimension R in Figure 5. Therefore if the substrate 110 is flat and the central stop 121 rests on it, the rim 124 is 0.05mm away from the substrate.

Thus when the fixing member has an excess 129 of two-pack, thermoset adhesive applied to it in the region of the spot and it is then pressed against the first fixed-part or substrate, the adhesive spreads to fill the concavity 123 and is squeezed out as flash 130 through the gap between the rim and the substrate. The flow expels air in front of the adhesive. Full movement abuts the stop 121 with the substrate and determines the maximum thickness of the adhesive as the 0.25mm maximum depth of the concavity. This dimension is typically suitable for exothermic curing of the adhesive to optimise its glass transition temperature. Suitable adhesives are industrial grade epoxy resin.

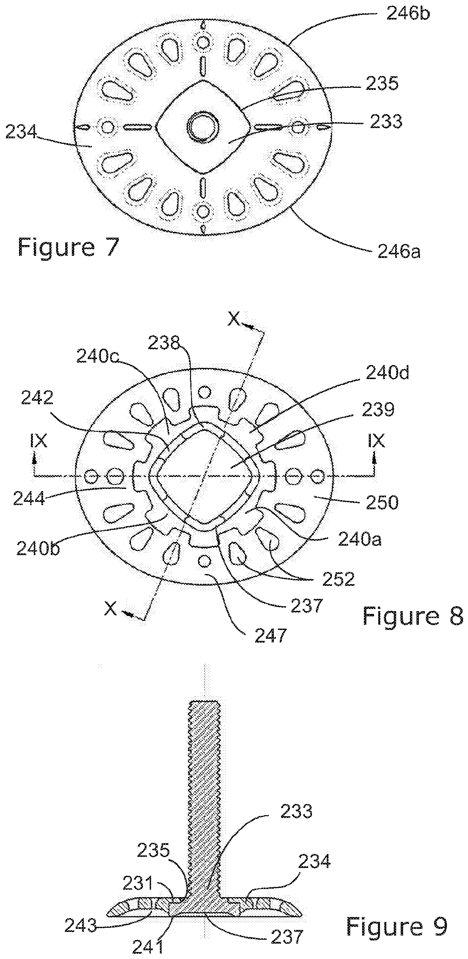

Turning on to Figures 6 to 11, the base fixing member 232 shown there corresponds to that of Figures 1 to 5 but incorporates further features. It is of two materials: a metal core 233 and a polymer extension 234, injection moulded to the core. The core 233 has a head with an indented square edge 235 to enhance grip with the polymer in torsion around a stem 230. The head of the core forms approximately the central third of the whole base. It has a step 231 allowing the polymer to partially over-lie the upper surface of the head of the core.

Its stop formation 237 is more extensive in being essentially of radiused, cruciform shape, with four radially extending fingers 238. It has a concave central concavity or depression 239 to compensate for the loss of concave adhesion area that there would due to its own area without the central concavity. The depression 239 could be less deep than the surrounding concavities 240, not least because the metallic core conducts heat to adhesive curing in the central depression. However as shown the surrounding concavities are shallower. The fingers 238 define a stop ridge 241, which follows the cruciform shape and provides a stable stop for abutment with a substrate. The ridge 241 has discontinuities 242 to allow adhesive flow out from the central concavity as the fixing-member is applied.

The concavities 240 are in effect four separate concavities 240a, 240b, 240c, 240d. They are linked radially beyond the fingers 238 at channels 243 interconnecting neighbouring individual concavities, although the channels 243 can be shallower than the concavities.

A land 244 semi-continuously extends around the concavities 240, at which they rise nearly to the level of the stop ridge 241, whilst leaving a layer of adhesive attaching the outer parts of the disc 234. The disc itself is not a truly circular disc-shape having in this case a very generally rectangular shape with straight sides and ends and radiused corners 246a. Other shapes are of course possible. From the land 244 to the shaped edge 246b, the base has a flat margin 250. Within the margin apertures 252 are provided. These are tear drop shaped arranged generally radially with three provided radially outwardly of each concavity. The apertures have blended orifices 254, 256 at both sides of the disc 234.

Another feature of this fixing member is that the channels 243 continue at reduced depth say 0.1mm and 5mm width to their respective straight portions of the rim 246. These extended channels 247 provide the ability for some adhesive to leave the concavities 240, without lifting of the base from the substrate, in the event of curing above glass transition temperature liberating gas which on expanding tends to displace a small proportion of the adhesive.

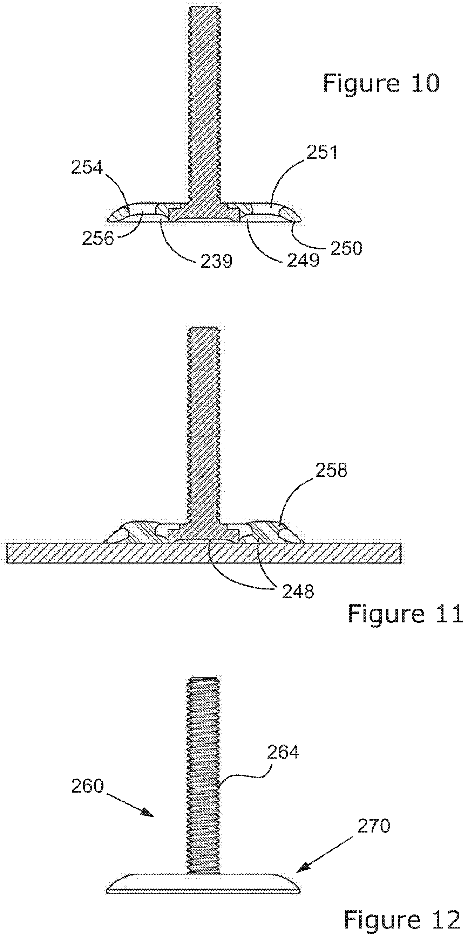

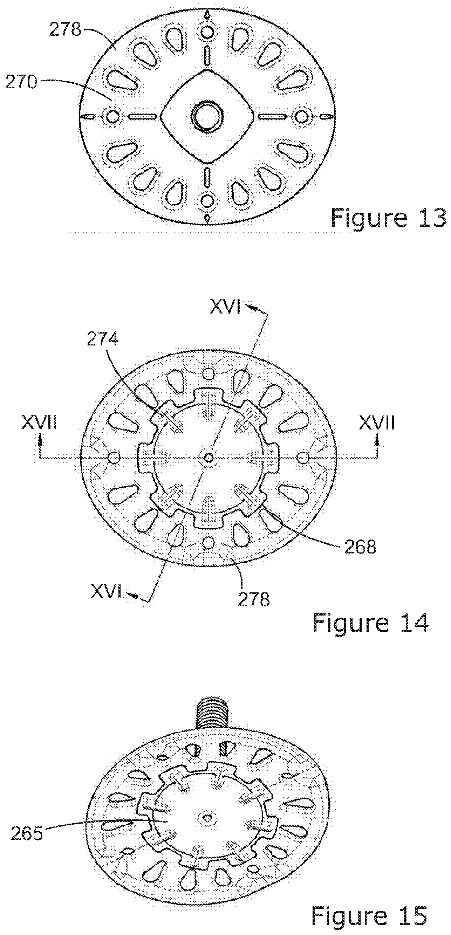

The mechanism of spreading the adhesive 248 in application of this fixing member is expected to differ to that which it would be if of low viscosity such as water. Pressing of the head into water is not likely to result in complete filling of the concavities, shallow as they are, and in particular not filling of the apertures. The adhesive is expected to have sufficient viscosity to squeeze out sideways filling the concavities. Any unevenness from one to the next such as might result in incomplete filling, is compensated for by flow through the channels. As the flow reaches the land 244, it is throttled where it reaches the land first as a result of the land to substrate gap being less. Air tends to be completely expelled from the concavities before flow in the gap establishes all round. Then the adhesive flows on out to the edge. As the head continues to be pressed towards the substrate, the pressure rises in the adhesive due to shear flow between the margin and the substrate due to the viscosity of the adhesive. As a result, the adhesive wells up through the apertures, forming "rivets" 258. Turning now to Figures 12 to 17, the fixing-member 260 there shown also has a metallic core with a threaded stem 264 and a base 265. The base has a step 266 on its upper surface, but its edge 268 is castellated for better torsional adherence with its over-moulded polymeric extension 270 and to the substrate via the adhesive used. The core has a central stop 272 on its underside and additional stop ridges 274, which radiate from the central stop 272 and have ridge lines which are coplanar with the central stop. Thus the fixing-member is stable on a flat surface. The ridges are in register with the castellations 268. Where the core has its central concavity, the central stop 272 does not have this. Rather the base 265 has an annular concavity 267 similar to that of the fixing-member 102. The polymer extension 270 continues the concavity to a flat margin 278. This has four radial channels 280.

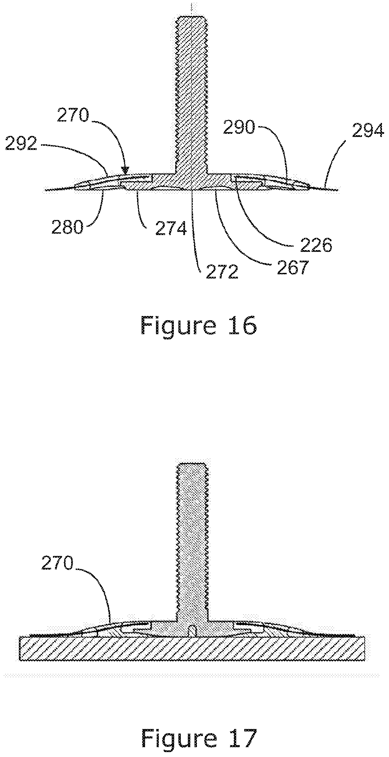

As shown in Figures 16 & 17, in this embodiment, the polymeric extension 270 incorporates textile reinforcement 290, typically a glass or carbon fibre woven and/or non-woven (including multi-directional stitched together) sheet, typically including continuous, non-crimped fibres. It extends from the castellations at the rim of the base of the core, across the apertures 292 in the polymer extension 270 and extends outwards as a web 294 beyond the outer edge of the polymer base extension. This web is directly adhered to the substrate by adhesive in the area outside the margin of the base, for load transfer to the substrate beyond the margin of the base. Where the base of the fixing is laminated between the layers of a laminar substrate, the web can extend into the laminate well beyond the edge of the base and the base extension. It is envisaged that the textile sheet may be continuous, as a tape or sheet extensive in two dimensions, from one fixing member to another. In this instance, the polymeric discs are moulded to the tape or sheet at determined spacings. In a particular application, the sheet may include electrical conductive fibres extending from one fixing position to another. This allows electrical connection of one fixing to another, or of one fixing to another component within or adjacent to the structure it is moulded to, in an otherwise non-conductive or poorly conductive product.

The moulded part of the base can be of thermoplastic polymers, provided it is not too waxy for adherence, for instance polyamide for instance Nylon 6 & polyetheretherketone for instance PEEK. Alternatively it can be of thermosetting polymer, for instance epoxy resin. The entire head can to of such engineering polymers. In such cases, instead of threading, complementary fitting of the two fixing-members can be envisaged. This allows for instance a universal head and different laterally engageable other fixing-members moulded for fixing of different.

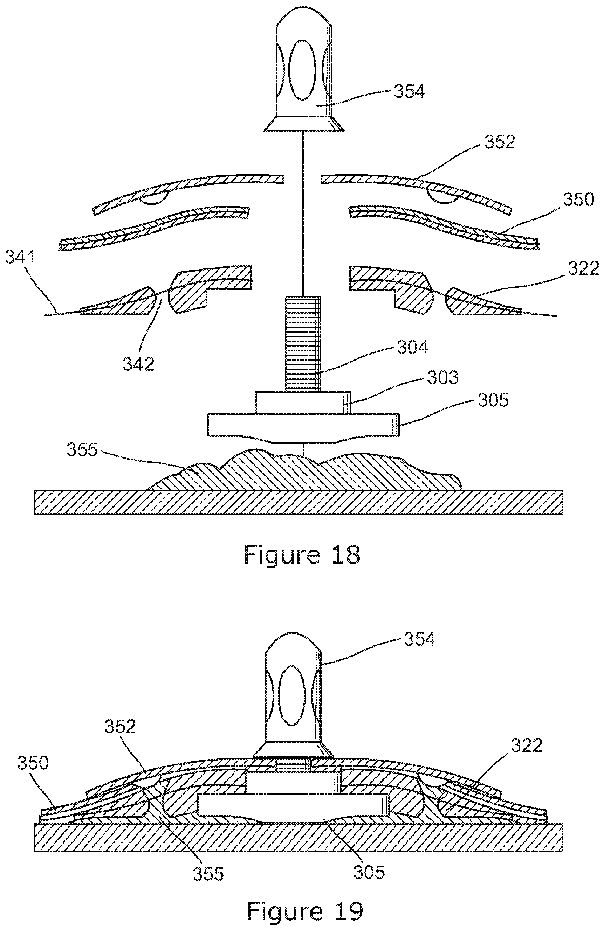

Referring to Figures 18 and 19, in a further embodiment a fixing member comprise a metal core 303 comprising a base 305 and threaded stem 304, and a moulded base extension 322, with apertures 342 through it from its underside through to its top side and a reinforcing web 341 moulded into it, similar to the fixing of Figures 16 and 17. In use the base 305 is placed on the substrate with adhesive 355 between the base and base extension and substrate. A fabric and adhesive laminate layer 350 is placed over the base extension 322 so that it covers its upper surface and covers the apertures 342. A clamp 352, which is in the form of a slightly domed plate injection moulded from thermoset with a central aperture that fits over the stem 304, is then placed over the laminate layer 350 and a sacrificial or reusable shield 354, which has a domed top to prevent it from puncturing the skin of a vacuum bag, placed over the exposed part of the stem 304. A vacuum bag is then placed over the whole assembly and used to compress the whole assembly onto the substrate. This forces the adhesive 355 up through the apertures 342 in the base extension 322 into the laminate layer, and shapes the laminate layer to the shape of the underside of the clamp 352 which therefore acts as a mould to shape the upper surface of the laminate layer, as shown in Figure 19. The resin adhesive 355 then cures, adhering the fixing to the substrate, and forming a 'matched' shaped upper surface on the laminate layer. The shield 354 is then removed exposing the threaded stem 304 for use, and the clamp 352 is removed leaving the fixing ready for use, including a shaped support formed form the laminar layer 350 and the threaded stem 304. (The under surface profile of the pre-moulded clamp plate can be any shape to match the bottom face of the object that is to be secured by the fixing that is attached during use. This substantially increases stress dissipation as there are two 'matched faces' transmitting loads.)

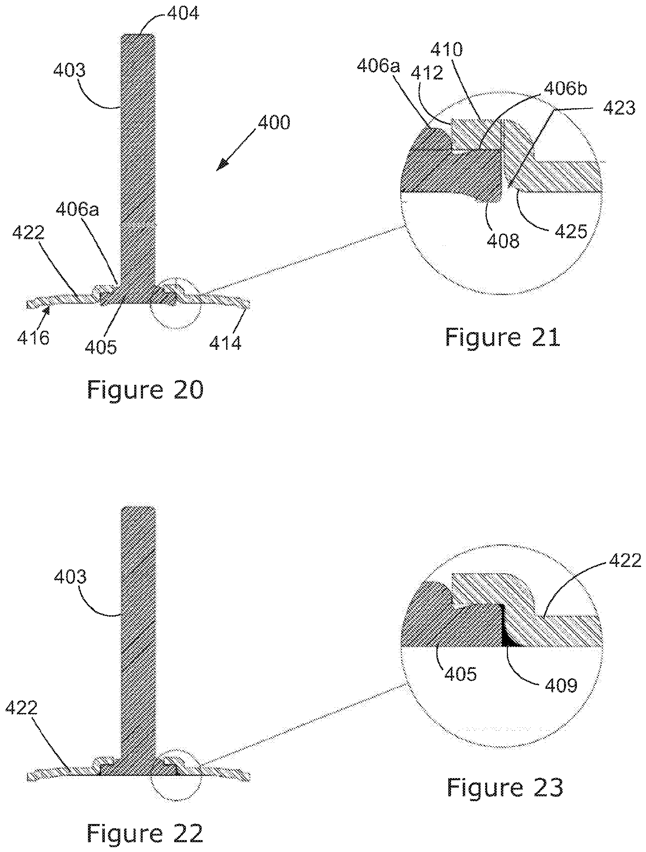

Referring to Figures 20 to 27, a fixing 400 according to a further embodiment is formed of two pieces welded together: a core 403, in the form of a bolt, comprising a threaded stem 404 with a head 405 at one end; and an annular base member 422. The core is arranged so that its head 405 forms part of the base of the complete fixing 400, with the stem 404 projecting upwards from the top of the head 405. The top surface 406 of the head 405 is stepped, as shown best in Figure 21, comprising an inner annular surface 406a which is raised above a surrounding outer annular surface 406b. The underside of the head 405 initially has a rim 408 round its outer edge so that it is slightly recessed or concave. The base member 422 has a raised rim 410 around its central aperture 412 which rests on the outer annular surface 406b of the core, and a downwardly projecting rim 414 around its outer edge so that its underside is recessed forming a cavity 416. During welding of the base member 422 to the core, which may be autogenous or any other suitable type of welding, the metal 409 from the rim 408 on the head of the core fills the gap 423 between the head 405 of the core and the radiused edge 425 on the underside of the raised rim 410 on the base member 422 so that the underside of the head is substantially flat and level with the underside of the base member forming a substantially flat surface inside the cavity 416, as shown in Figures 22 and 23. This weld process joins the bolt 403 to the base member 422 by melting, and filling the gap between, the facing surfaces of the bolt and base, so that they become a one-piece component.

In use, the cavity 416 is filled with adhesive and the base is pressed onto a substrate until the rim 414 contacts the substrate and forms a stop. The adhesive within the cavity 416 is then cured to secure the fixing to the substrate. It will be appreciated that further stops can be formed on the underside of the fixing, either on the head of the core 403 or on the base member 422.

Although the cavity 416 is described above as having a substantially flat inner surface, the head 405 of the core, or the final combined base, or both, are in other embodiments concave or domed, for example being of a parabolic profile in cross section. This concave shape will give the bolt head (when used as fixing on its own as described below) or when welded to the base as in this embodiment, additional surface area, and a larger volume within the cavity. This provides a number of advantages. The curved shape mimics and provides the natural domed form created by a tensional force. The domed centre contains more adhesive thereby allowing forces in the adhesive to be distributed over a wider area. The concave shape converts more of the load in the base into a tensile rather than purely bending load as seen on a flat base. The additional space allows the polymer chains in the adhesive to align vertically, i.e. at right angles to the substrate. The bond line interface can then collectively resists tensile, peel, shear and cleavage loads. The parabolic base reduces shear subjected to an adhesive during installation. This enables even more polymer chains to remain vertical to the substrate and direction of tensile loads. The progressive compression of the concavity also allows other polymer chains to maintain a varying array of angles from 0° to 180° relative to the surface of the substrate. This enables the fixing to resist loads is several forms.

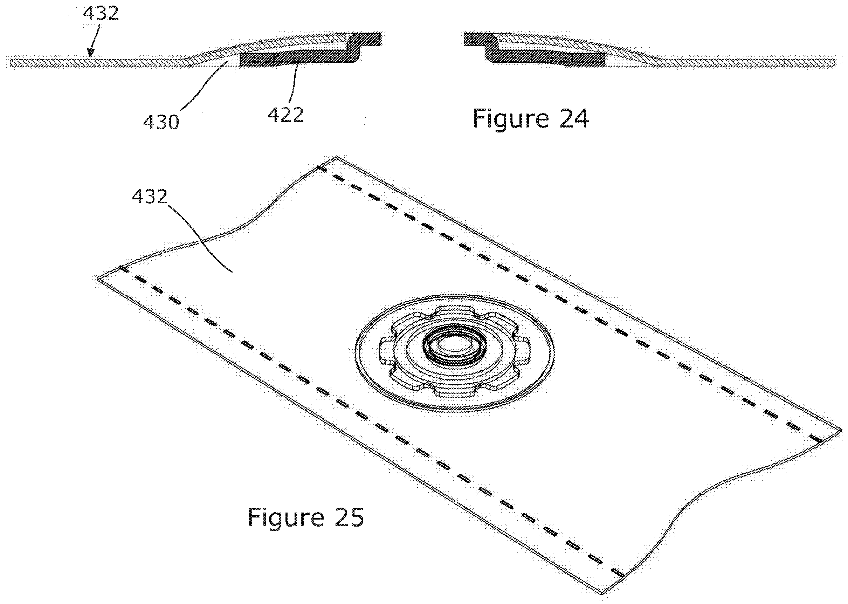

Referring specifically to Figures 24 to 27, the base member 422 of Figure 20, can be overlaid with moulded base extension 430 and a fibre reinforcing layer 432. The base extension 430 is similar to that of Figures 18 and 19 with the reinforcing layer 432 moulded into it. The reinforcing layer 432 is formed of non-crimped continuous filament ribbon 433. This is made up of a series of tows 434, each comprising a bundle of a large number of filaments 436 and all lying parallel to each other and flat, forming the warp of the ribbon, which are secured together either by adhesive or by a weft formed of stitching 437 which is woven through the layer formed by the tows 434 and holds the tows together. Because the filaments 436 of the warp are essentially straight they are very strong in tension. The reinforcing layer 432 is made up of two or more layers of filament ribbon 433, with the warp of one extending at 45 degrees to that of the other so as to provide strength in different directions. Obviously different numbers and orientations of the ribbon can be combined as required, but relative angles of 90 or 45 degrees would often be suitable. In this embodiment the core and base member can be made of a rigid or flexible thermoplastic or thermoset resin, either moulded integrally as a single piece or moulded separately and bonded or welded together, so that the whole fixing is non-metallic.

The reinforcing layer 432 is arranged to be longer, in the direction or directions in which the filaments extend, than the diameter of the base member, so that many of the filaments of the reinforcing layer each extend across the surface of the base and then out beyond the edge of the base. This means that, where the reinforcing layer is attached to the substrate by adhesive, or interleaved in between two or more layers of a laminar substrate, stress from the fixing is dissipated over an area of the substrate that is much larger than base itself. This has the advantage that it enables the structure into which the fixing is built to be reduced in weight, for example by: removing or reduce carbon or glass fabric and resin weight per square meter within the substrates surrounding laminates; removing feather edged timber or metal reinforcing plates traditionally used to spread load; removing highly thixotropic filler resins used to make a 100% bond between these timber / metal elements and the substrate; using smaller and therefore lighter and cheaper fixings due to the high stress performance provided by the welded core and base member and the reinforcing layer. All these savings can be enjoyed when the constructor is using all moulding systems such as hand lay-up, press moulding, vacuum and pressure moulding, or pre-preg laminates (fabric mats pre-impregnated with heat triggered resins).

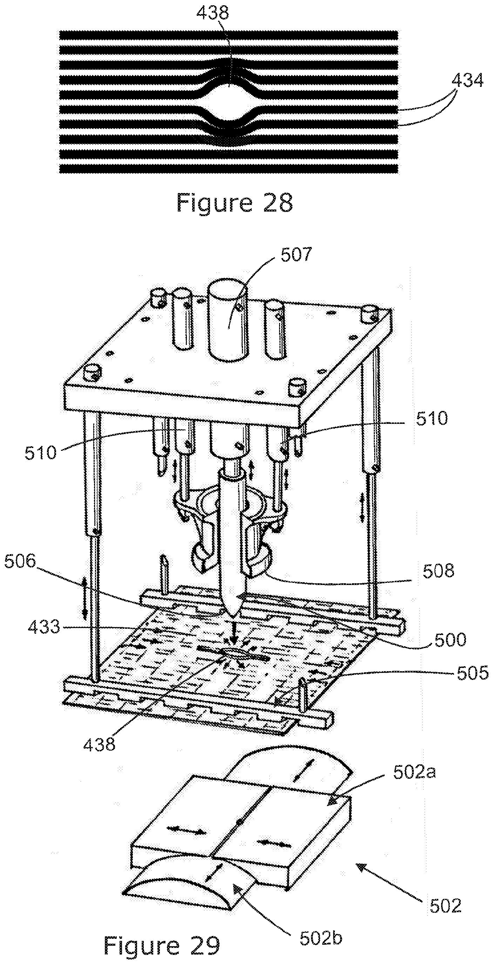

In order to form a hole 438 through the reinforcing layer 432 through which the stem 404 of the fixing can project, a process is used in which the warp and weft are pushed away from an area leaving the hole 438, without cutting the filaments within the warp or the weft. Referring to Figure 28, generally the process involves pushing a prong 500 through the ribbon 433 so that the fibres or filaments 436 are pushed aside leaving the hole of a size and shape defined by the prong 500.

Referring to Figure 29, the hole forming tool comprises an anvil assembly 502 over which the ribbon 433 can be laid and held in place by clamping bars 505. The clamping bars extend parallel to the tows 434 and are located on other side of a central part of the ribbon which is to be pierced, so that the filaments of the tows in the central part of the ribbon are free to move along their length. The anvil assembly 502 comprise two pairs of sliding support members 502a, 502b, an upper pair 502a having upper surfaces which are flat and level and being movable horizontally towards and away from each other so as to open and close the gap between their abutting edges, and a lower pair, located below the upper pair, and movable horizontally, perpendicular to the movement of the upper pair, to open and close a gap between their abutting edges. The upper pair of support members 502a are tapered towards, and very thin at, their abutting edges, and the lower pair 502b are located directly below the upper pair 502a so that as both pairs are moved apart to open the anvil assembly they define a central hole through the anvil assembly surrounded by a substantially flat surface. The centre of the hole forms the centre point of the anvil assembly 502.

The prong 500, which is in the form of a vertically mounted rod 504 with a sharp point, or a sharp curved edge, at its lower end 506, is mounted above the centre point of the anvil assembly 502, and movable vertically by means of an inner ram 507 so that it can pass down through the hole in the anvil assembly 502 when the hole is opened. A metal sleeve forming a chilling ring 508 is mounted coaxially around the prong 500 on a pair of outer rams 510, and has an annular surface on its lower end which can be brought down into contact with the ribbon to press it against the anvil assembly 502. The chilling ring is thermally isolated from the prong 500 by a thin isolating tube of reinforced high temperature resistant thermoset structure.

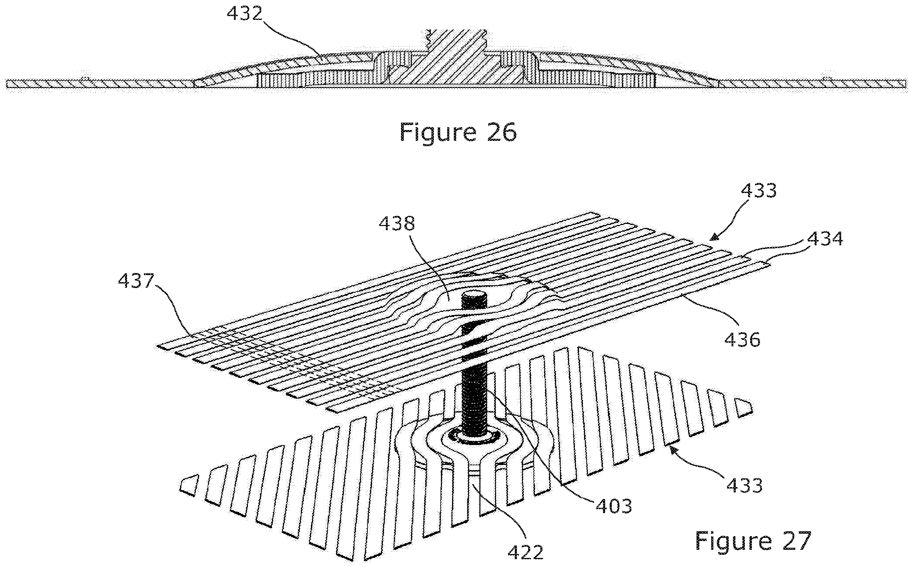

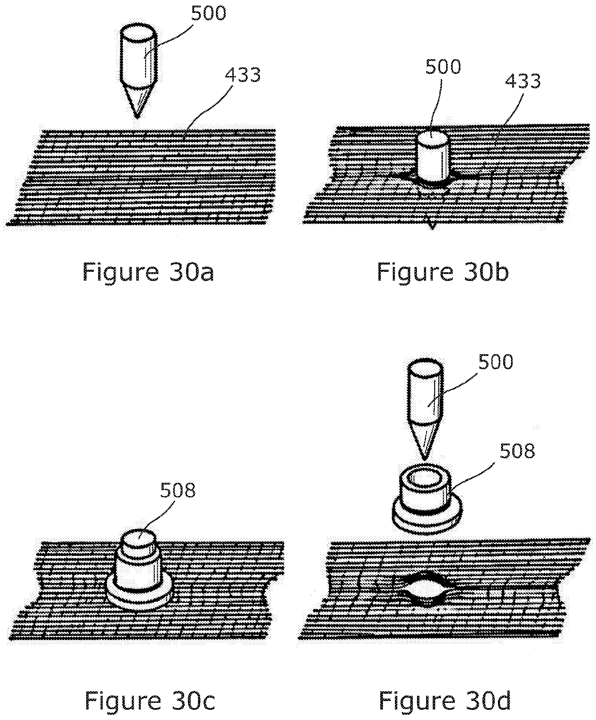

Referring to Figures 30a and 30b, in operation, the anvil 502 assembly is closed, and the ribbon 433 placed on it and clamped in place with the tows of its warp parallel to the clamping bars 505. The prong 500 is heated, and brought down into contact with the ribbon, and then pushed through it, as the anvil is opened to allow the prong 500 to pass through it. The heated prong softens or melts the thermoplastic binder or thread in the ribbon, allowing the filaments to move relative to each other, and pushes the filaments aside to form a hole through the ribbon. The ends of the filaments that are pushed sideways are pulled inwards so that the ends of the ribbon take on a curved shape as shown in Figure 30b. The support members of the anvil 502 stay in contact with the prong as it is pushed through the hole in the anvil, stopping the ribbon from being dragged downwards with the prong. At this point of the process the individual filament / tows are compressed tightly around the prong 500. This tight bunching will prevent wetting out of filaments at the over-mould stage so the prong diameter is increased to over stretch the fabric and then once retracted it allows the filaments and tow to relax back to the desired hole diameter and have gaps between them which will fill with resin later. As shown in Figure 30c, chilling ring 508 is then brought down into contact with the ribbon. This cools and hardens the thermoplastic binder and/or stitching, fixing the filaments in their curved shape around the hole. The prong is then withdrawn and the chilling ring lifted off the ribbon as shown in Figure 30d. This process is typically repeated for each piece of ribbon, before they are assembled together in the required orientations onto the fixing as shown in Figure 27. However two or more ribbons could be pierced simultaneously on the tool. This same process can be applied to a metallic mesh fabric but without the addition of hot and cold tooling. During this process signal cabling can be installed to form around the hole ready to receive or transmit data.

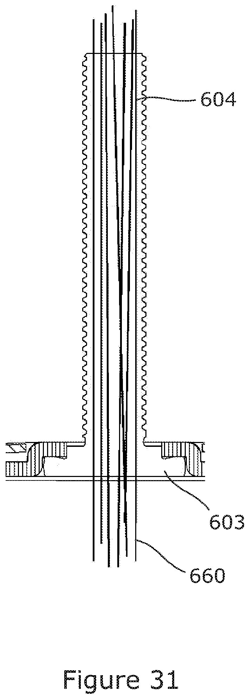

Referring to Figure 31, in a further embodiment the fixing design is the same as that of Figures 24 to 27, but in this case the core 603 has reinforcing filaments 660 extending through it parallel to the longitudinal axis of the stem 604. These filaments are placed in the mould in which the core 603 is moulded before the thermoset making up the main body of the core 603. This can be done by drawing a bundle or tow of filaments into the tool, in which case the individual filaments are preferably separated using mechanical movement and/or air to improve wetting of the filaments. The thermoset is then injected into the mould and set so that the filaments are incorporated into the finished core. The filaments can be, for example, carbon fibre, but can also be of metal or other suitable materials. This can add significantly to the tensile strength of the stem 604 of the fixing. The reinforcing filaments 660 can be placed under tension just prior to over moulding with the thermoset or thermoplastic, which may be plain or milled fibre reinforced.

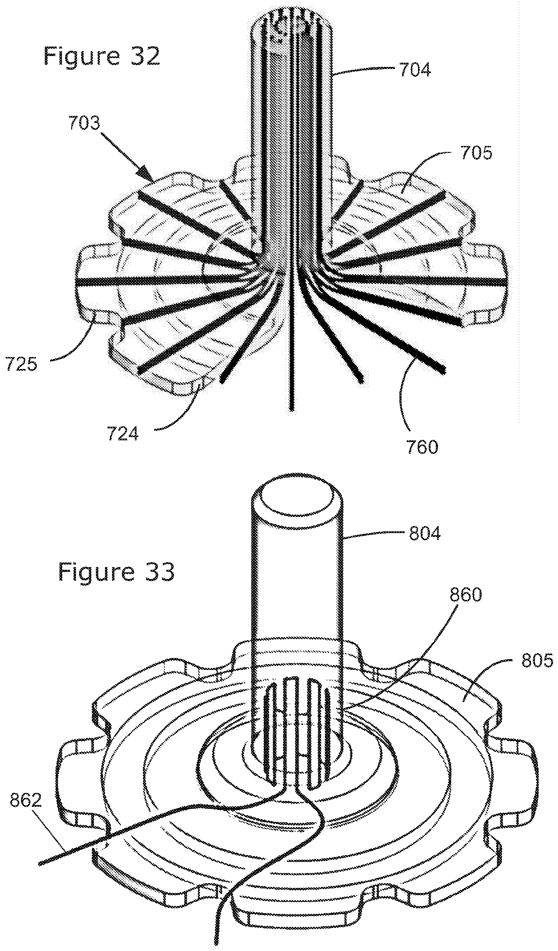

Referring to Figure 32, in a further embodiment, the fixing is the same as that of Figure 31, but in this case the reinforcing filaments 760 extend axially along the stem 704 of the moulded core, abut then also radially out through the head 705 of the core 703 which forms the base of the fixing. This increases the strength of the core particularly at the base of the stem 704 where it joins the head 705. The ends of the filaments can extend out beyond the outer edge of the head 705 so that they can be bonded onto, or laminated into, the substrate.

In this embodiment the cross sectional shape of the base 722 is similar to that of Figures 3 to 5 but without the central stop, and with cut-outs 725 around edge of the base which form breaks in the rim 724. The parts of the rim 724 that are present form a number of curved feet around the outer periphery of the base.

Referring to Figure 33, in a still further modification, as well as the reinforcing filaments, a strain gauge 860 is moulded into the stem 804 of the fixing, with connection wires 862 either connected to the underside of the head 805, or moulded into the head 805. The connection wires can be connected up to a stress detection circuit so that stresses in the fixing can be monitored in real time. The addition of a strain gauge may also be made to a metallic bolt during the stage that it is over moulded.

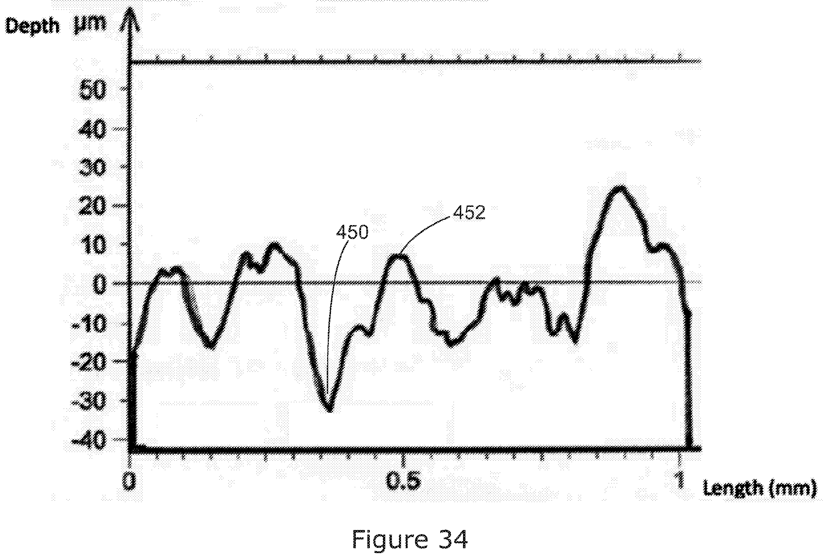

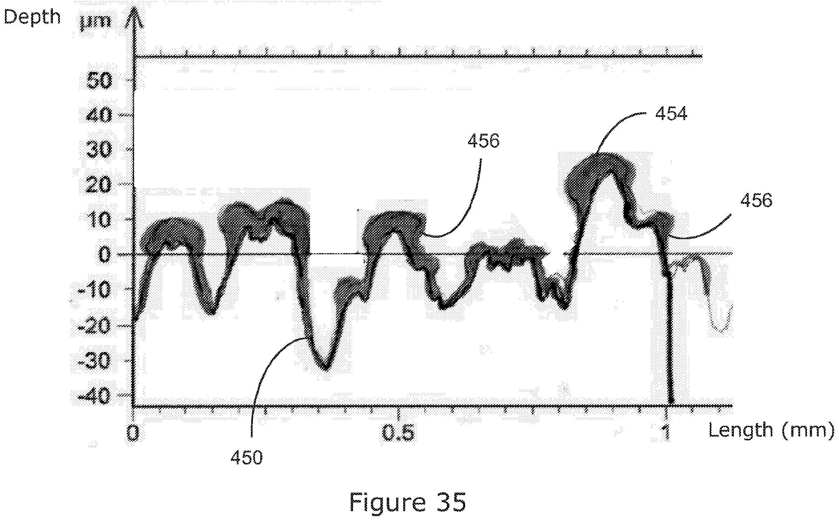

Referring to Figures 34 to 37, in a further embodiment the fixing is the same as that of Figures 20 to 24, except that the underside and the top surface of the base 422 are grit blasted and electroplated to roughen them and increase the adhesive surface area. Referring to Figure 34, the first step is to grit blast the surfaces of the base 422. In one example this was done with 12 mesh aluminium oxide grit at 60 psi blast pressure from 100mm standoff for 30s. The base 422 was made of carbon steel (in this case Cold Reduced low carbon steel CR4 = BS1449 part1 = AISI 1018 = EN 10130), but other forms of steel such as AISI Type 316L stainless steel can also be used. This resulted, as shown in the profile of Figure 34, in recesses 450 being formed in the surfaces of the base up to about 30 microns deep, with peaks 452 between the recesses 450. The recesses may be short in the form of wells or elongated in the form of valleys. The grit blasted surface is then electroplated with zinc 454 or zinc nickel, or another suitable material. The process used for the electroplating is barrel electroplating in which ion rich plating solution is continuously washed over the recessed surface. As the plating solution reaches the tops of the peaks first, the ions tend to be deposited there before the solution can move down into the recesses to deposit ions at the bottom. Therefore, as shown by the thickened areas in Figure 35 the zinc tends to plate the tops of the peaks and ridges on the surface before it coats the bottoms of the recesses. This tends to broaden out the peaks and ridges until the zinc forms overhangs 456 over the sides of the recesses. For each recess, the overhang, if there is one, may be on only one side, or on both or all sides. An overhang may be any area of the roughened surface which faces at least partly inwards towards the main body of the base, i.e. more than 90 degrees away from a nominal flat outward facing surface.

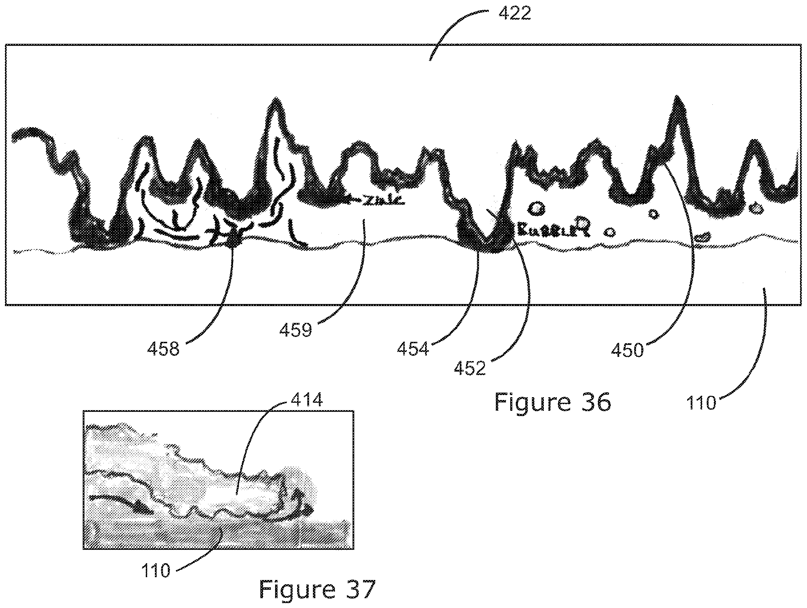

Referring to Figure 36, when this surface with overhanging formations on it is bonded to a substrate with adhesive, the adhesive fills the gaps under the overhangs and forms a mechanical attachment. The polymer chains 458 of the adhesive 459, in this case epoxy, flow into the valleys in the roughened surface of the base and therefore take up multiple orientations perpendicular to, as well as parallel to the surface of the substrate. In addition to the traditional adhesive chemical bond this helps the epoxy or over-moulded material to form a strong mechanical bond thereby enabling a wide range of stress load and axis to be withstood by the fixing. In addition, the increased surface area produced by roughening the surface in this way further increases the bonding between the epoxy and the base simply by increasing the area of adhesion between the two.
Referring to Figure 37, this process is also applied to the underside of the downward facing rim 414 around the edge of the base. This area acts as the stop which comes into contact with the substrate 110. However the presence of the recesses, especially if they are in the form of valleys, in this area means that adhesive can flow from the concavity under the base out between the stop and the substrate thereby adhering the stop area to the substrate allowing the escape of adhesive and air. The recesses in the underside of the stops also provide bond line thickness control, as they allow the adhesive to permeate under the whole of the underside surface of the base, thereby ensuring that the whole of the surface is bonded to the substrate.

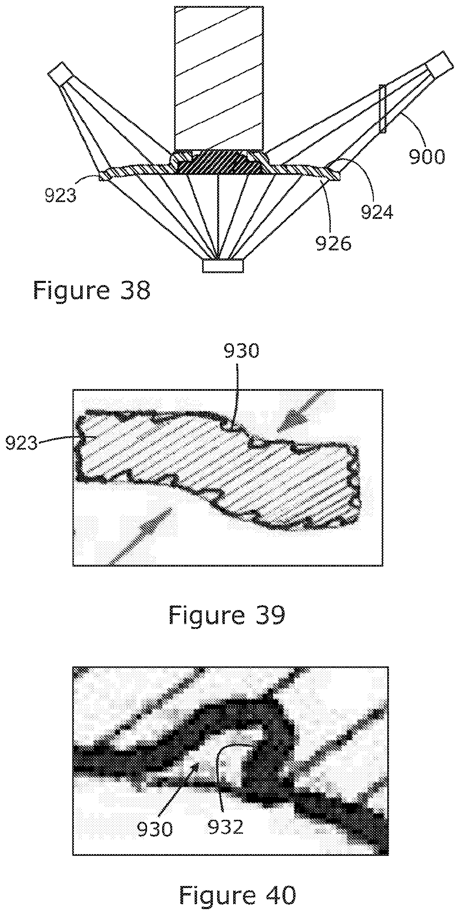

Referring to Figure 38, an alternative method of producing the overhanging recesses in the base is to control the impact direction of the grit 900 used in grit blasting to produce a recess with at least one undercut, and therefore overhanging, side. In this embodiment the same fixing is grit blasted in the same way as described above but the grit 900 is directed at an angle of about 45 degrees to the surface of the base 922. For the top surface of the base this is achieved by directing the grit downwards and radially inwards as shown in Figure 38 at an angle of about 45 degrees to the top surface 924. For the underside 926 of the base grit is directed from a point below the centre of the base up towards the underside of the base. The grit impacting on the outer edge of the underside of the base hits at an angle of about 45 degrees to the surface, whereas at the centre of the base the impact angle is about 90 degrees. This results in a roughened surface with some recesses 930 formed with overhanging or undercut sides 932 as shown in Figure 39 and in more detail in Figure 40. Electroplating, for example with zinc, can be applied to this surface in the same way as described above with reference to Figures 34 to 37 which will further increase the degree of overhang of the recess sides. It will be appreciated that, while the angle of the impact of the grit with the surface will affect the shape of the recesses and the degree of undercut, the exact direction at which the grit impacts the surface of the base can vary for any particular impact angle. For example, rather than downwardly and radially inwards, the grit can be directed downwardly and part tangentially to the base.

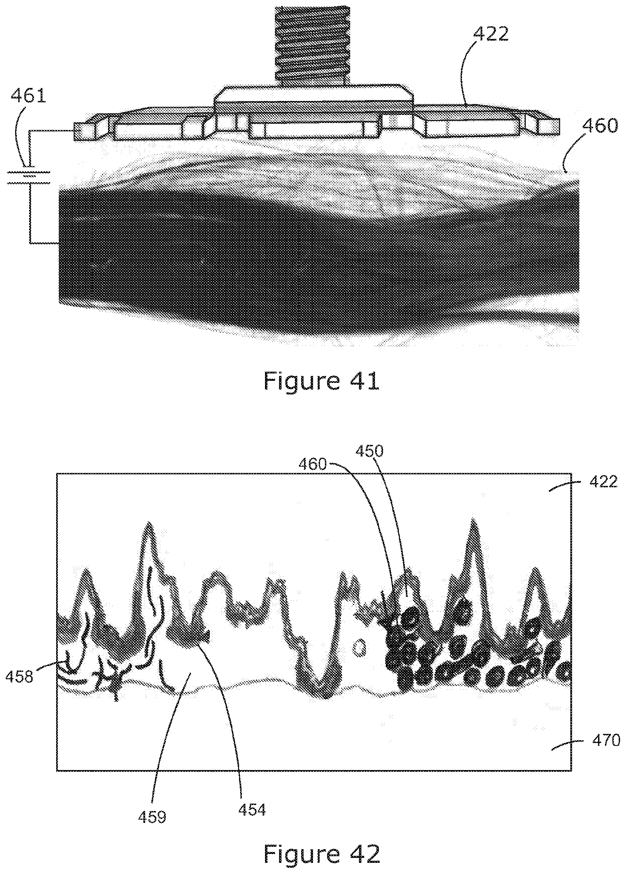

This roughening process can be applied to many different designs of fixing. In another embodiment a bolt corresponding to the core 403 of Figure 20, with a recessed head and a stem, can be used as a fixing according to the invention. The effectiveness of this arrangement is increased considerably if the vertical edges, and the top surface of the head 405 of the bolt which becomes the underside of the base when the bolt is fixed to a substrate, is roughened according to one of the processes described above. Referring to Figure 41, the base 422 with overhanging recesses 450 can be place onto, or overlaid with, carbon fibre 460 which will fit into the recesses 450, specifically if they are in the form of valleys extending across the surface of the base 422. If the recessed surface of the base 422 and the carbon fibres 460 can then be covered with or coated with a polymeric material such as epoxy, this will tend to secure the fibres within the recesses. This is shown in detail in Figure 42. In this example, the underside of the base 422 is shown as placed over a layer of carbon fibres 460 which are laid over the substrate 470 and covered with epoxy adhesive before the base 422 is placed on top to adhere it to the substrate. The polymer chains 458 of the adhesive 459 extend up into the recesses 450 as described above with reference to Figure 36. In a similar way, if the top surface of the base 422 is recessed in a similar way, a reinforcing material sheet of unsaturated carbon fibre can be placed over the top of the base in a similar way to that shown in Figure 27, and an overmoulding formed over the reinforcing sheet, and the reinforcing material will be urged into the recesses on the top surface of the base in the same way as shown in Figure 42 for the underside. This process can be used in particular with the reinforcing sheet described above with reference to Figures 24 to 28. In this case the filaments of the reinforcing material 432 become embedded in the recesses in the top surface of the base member 422 and are held in place by the polymeric material of the base extension which moulded onto it. The polymeric material is caused to flow over the reinforcing material and into the recesses in the base member, and it therefore tends to drag the filaments of the reinforcing material into the recesses, before it is cured and holds them there.

In order to encourage the fibres 460 of the reinforcing material to move into the recesses 450, an electric potential can be applied between the base 422 and the carbon fibres 460, using a DC electrical power source 461. The potential difference set up between the fibres and the base causes an electrical attraction between them, so that the fibres are attracted towards the surface and urged into the recesses 450. The electrical potential is applied while the dry fibres are on contact with or adjacent to the base 422, and maintained during the over-moulding or other process in which the polymeric material is applied and cured, so that the electrical attraction holds the fibres in place in the recesses during the curing. As the fibres are in contact with the base, some electrical current will flow, but the conductivity is relatively low due to the small area of contact between the fibres and the base, so an effective electrostatic potential can be maintained.

Referring to Figure 43, one application of the fixings described above is in the manufacture of vehicle body structures. For example a vehicle body 950 can be produced as a set of carbon composite body sections 952 which are secured together by a series of fixings 954 which can be any of those described above, but in this embodiment are fixings as shown in Figure 33 including strain gauges. Although the whole vehicle body is built up of body sections, the A-pillar 956 will be described in more detail as an example. The top end of the A-pillar is connected to the roof panel 958, and the bottom end of the A-pillar is connected to the bulkhead 960 dividing the passenger compartment from the engine compartment. In each case the connection is by means of a set of fixings 954. When the body structure is initially assembled, the body sections are bonded together with a thermally reversible thermosetting, thermoplastic, or other adhesive, as well as being secured together with the fixings 954. Each of the fixings 954 having their bases secured to one of the body sections with the other body section being secured to it by a nut which forms the second part of the fixing. The connection wires 862 from the strain gauges in the fixings are connected to a central processing unit which is arranged to monitor the signals from the strain gauges to monitor for excessive stress applied to any part of the vehicle body. The connections between the strain gauges and the processing unit may be via connecting wires or fibre optic cables embedded in the material forming the body sections. In the event of an impact or other damage to the vehicle, the strain experienced by the body panel, for example the A pillar 956 will be detected by the processing unit which can be arrange to indicate, either to the driver via a display on the dashboard, or via wireless communication to a remote point such as a vehicle dealer or servicing point, that the vehicle has been damaged, and the part of the vehicle body that needs to be replaced. To replace the damaged body panel, the fixing is released by undoing the bolts and then the thermoset adhesive is warmed and melted, and the damaged panel is removed and replaced.

Referring to Figures 44a and 44b, a modified fixing for this application comprises a nut 970 having a castellated outer rim 972, an upstanding rim 974 around its threaded bore on the top side, and a flat or domed underside. The nut can be welded into the base member 422 of Figure 20 in place of the bolt 404. A bolt 976 as shown in Figure 44b can then be screwed into the bolt. The bolt has a castellated rim 978 to its head 980 and a threaded shank 982. Alternatively the bolt 976 can be welded into the base member 422 and the nut 970 screwed onto it in a similar manner to that shown in Figure 2. A further embodiment is shown in Figure 44c, in which the nut is the same as that of Figure 44a, but without the castellated rim.

Referring to Figure 44d, in a system which requires two panels to be assembled together, such as the vehicle body of Figures 43 and 44, the bolt 44b and a first base member 422 are mounted on one panel, in this case the bulkhead 960, and a further base member 422a is mounted in the other panel, in this case the A pillar 956, with the raised central part of the base member located in a correspondingly sized hole in the panel. The raised rim 974 on the nut 970 fits into the central aperture through the base member, and the outer rim 972 of the nut fits inside the raised central part of the base member 422a as the nut is tightened onto the bolt to secure the two panels together. The bolt 976 has a relatively short shank forming a low profile fixing.

Referring to Figure 45, a further fixing 1000, which is not an embodiment of the invention, is for fixing pipe sections 1002, 1003 together. Each of the pipe sections 1002, 1003 has a flange 1004 at its end with fixing holes 1006 through it. The fixing is the same as that of Figure 32, except that the base 1005 is in the form of an arc of carbon or glass reinforced composite or thermoplastic, and there are two threaded stems 1008 which can be metallic, thermoset or thermoplastic, projecting from the base. The reinforcing filaments 1010 each extend along the length of both stems 1008 and through the part of the base 1005 between the two stems. Figure 46 shows how the fixing is produced, with the filaments 1010 being threaded through central bores through the fixing cores that form the stems 1008, the cores being inserted in holes through the base 1005, and the bores being filled with epoxy or other adhesive which is also applied to the top surface of the base 1005 to bond the filaments 1010 to the area of the base between the stems.

Referring to Figure 47, a tool for mounting the fixings described above onto a substrate will now be described. The tool comprises a vacuum cup mounting base 1 with primary ball joint male part or ball 15 fixed to it. The primary ball joint also includes a female part or cup 17 to which is connected an arm 21 which includes a secondary ball joint ball or male part 21. The cup 23 of the secondary ball joint has an installation 29 mounted on it by means of a mounting arm 27. An installation plunger 36, on which the fixing can be mounted, is itself mounted on the mounting arm 27.

The vacuum cup 2 comprises an over-centre toggle action lever 3 for securing and releasing the suction cup, and a vacuum cup rod 4, spring 5, and pin 6 provide the over-centre action of the lever 3. Further fixing mechanisms are provided including neodymium magnets 8 for metallic surfaces, bolt or screw holes 9, and a double sided adhesive tape cassette 13 with serrated cutter 44. The vacuum cup 2 also has moulded in and fluorescent painted datum line pointers 10 for aligning the cup, gang attachment points 11 for 'ganging up' the tool with further similar tools , and vacuum fixing points 12 to 'triangulate on' two more vacuum cups. Storage is also provided on the cup 2 for five different diameter Chucks 14.

The primary female ball joint cup 17 comprises a primary over centre locking arm 18 and securing pin 19 and locking ring 20.

The secondary male ball joint 21 is fixed to the primary ball joint cup 17 by a fixing stud 22 which screws in permanently. The secondary ball joint cup 23 comprises a secondary over centre locking arm 24 with a pin 25 and locking ring 26 which can be locked and released to lock and release the secondary ball joint.

The installation arm mounting shaft 27 is in two parts, with one part fixed to the secondary ball joint cup 23 and the other fixed to the installation arm. The two parts can rotate relative to each other and retained in a number of relative positions by means of spring loaded bearings locking in indexing recesses 28. The spring loaded indexing is lockable in any one of 16 positions separated by 22.5° and indicated by a rotary position marker 30.

The installation arm 29 has the installation plunger 36 mounted in it within a mounting sleeve 35 so that it can move through the installation arm 29 between a retracted and a released position. The plunger is urged towards the released position by means of a torsion spring 31, but can be locked in the retracted position by a locking mechanism, which can be released by means of a release trigger 33. A rotary damper 32 is arranged to damp movement of the plunger 36 through the installation arm 29. A three axis spirit level 34 is provided on the installation arm so that the orientation of the fixing on the plunger can be checked.

The installation plunger 36 has a pointer 37 with a sharp point 39 at one end and is arranged to hold a chuck 41 at the opposite end into which the fixing can be inserted. A rotary gear rack 38 extends along the side of the plunger which engages with a drive gear that is driven by the rotary spring 31. The rotary damper 32 damps rotation of the drive gear. Inside the plunger 36 towards the chuck end there is a fixing chamber 40 which is arranged to receive the stem or bolt of the fixing, and which fits from M4 diameter x 10mm long bolt to M12 diameter to 100mm long bolt, or other fixings as required.

Installation of the fixing comprises the following steps.

### Step 1 - Set Up, Loading Fixing and Proving Location and Process

Install matching chuck 41 into installation plunger 36.
Push the installation plunger 36 up the installation arm 29 until it reaches the retracted position and the release trigger 33 locks it into the retracted position.
Locate the tool on the substrate by using the moulded in pointers and fluorescent location indicators 10.
Attach the tool to the substrate 42 by using one or more of the following solutions: vacuum cup 2; double sided adhesive tape 43 stored within tape cassette 13 with serrated cutter 44; neodymium magnets 8; or bolts or screws through the holes 9.

### Step 2 - Multiple axis adjustment is made after the tool is fixed to the substrate, including the following steps.

Rotating the primary ball joint cup 17 about the primary ball joint ball 15 which is mounted on Vacuum Cup Mounting Base 1 and locking with the locking arm 18. Rotating the secondary ball joint cup 23 on the secondary ball joint ball 21 so that the installation arm 29 and installation plunger 36 axis is in the required direction, such as vertical, and locking with the locking arm 24.
Load the fixing 45 into the chuck 41.

### Step 4 - Dry Check of Location of fixing within 1mm of target and prove installation process, including either or both of the following.

Rotating the installation arm 29 with the fixing 45 mounted in it but 'dry' (free of adhesive), so that the fixing 45 is towards substrate 42 and pressing the release trigger 33 to lower the fixing and compressing it onto substrate 42.
Lowering the point 39 of the installation plunger 36 onto the substrate 42 until it touches centre of target 47 position.
Rotating the installation arm 29, installation plunger 36 and fixing 45 back into the inverted position if necessary.

### Step 5 - Installation

This includes the following steps.
Applying adhesive to the fixing.
Rotating the installation arm 29 and fixing 45 towards the substrate 42 and pressing the release trigger 33 so that the installation plunger 36 descends and compresses the adhesive 48 and fixing 45 at a constant rate of decent and pressure onto the substrate 42 without clicking, jerking, panting or vibrating.
Allowing the fixing to 'self-level' on curved or uneven substrate using flat or 'variable bond line depth gauge feet' 49
Curing the adhesive, optionally including further clamping or heat acceleration.

Referring to Figures 51-55, optional additional steps include: use of an adhesive profiling tool 50 which can be temporarily mounted on the fixing 45 to scrape off excess adhesive, after compression stage to clean up, and feather the edges 54b of the adhesive to eliminate 'Edge stresses'; completing installation action with a 'composite clamp' 51; or application of a heated pad 52 to accelerate curing. Any of these can of course be used in combination. The profiling tool 50 comprises a clip portion 50a formed of two curved resilient arms 50b which are each curved so that they fit around the stem of the fixing to clip the scraper to the fixing, and a profiling portion 50c which is arranged to extend radially outwards from the stem when the tool is clipped in place. The profiling portion 50c is formed of two parts: one 50d arranged to extend upwards, i.e. parallel to the axis of the stem when the tool is clipped in place, and the other part 50e forming a blade extending horizontally from the bottom edge of the first part and having an edge, which is remote from and parallel to the first part, which is tapered to a sharp adhesive removing edge 50f. The outside of the right-angled corner between the two parts 50d, 50e is rounded to form a smoothing surface 50g so that it will smooth any adhesive that it passes over when it forms the leading edge. When the tool is clipped in place it is pushed down so that the horizontal blade is in contact with the base of the fixing. The length of the blade 50e is such that it extends beyond the edge of the base of the fixing, and therefore over any excess adhesive that has been forced out from between the base and the substrate. The tool is then rotated about the stem with the adhesive removing edge 50f forming the leading edge, so that any excess adhesive 54a is lifted off the substrate and collected on the top of the blade. The tool is then rotated in the opposite direction so that the adhesive removing edge 50f is the trailing edge and the smoothing surface 50g forms the leading edge, so that the adhesive is flattened and smoothed by the rounded smoothing surface, to form a feathered edge 54b to the adhesive. This can also force out air pockets in the adhesive, drive off excessive liquid adhesive from around the fixing, and eliminate stress inducing protuberances in the laminate.

Another optional step is for a Hold Pressure to be exerted during entire cure process as specified by adhesive manufacturer and moulding process instructions.

### Step 6 - Removing Installation Tool

Remove the tool by releasing the chuck 41, releasing the trigger 33 and pulling the installation plunger 36 up through the installation arm 29.
Release the tool from the substrate 42 and store the chuck 41 in the chuck store 53.

**The tool describe has a number of benefits:**
**Optimum Bond:** The tool enables perfect installation and adhesion processes for adhesive fixings.
**Fast & Easy operation:** with a 60 second process time.
**Compact** enough to locate next to installation site.
**Attaches to most substrates:** such as composite, metals, timber and concrete.
**Multi Angle Attachment:** to horizontal, vertical and inverted surfaces using twin lockable ball joints for 360 degree horizontal adjustment & 180 degree vertical adjustment.
**Secure:** Does not break away from substrate easily particularly shear on vertical surfaces.
**Robust:** Can operate in 1^{st} line field hanger environments- wet, dry, hot, cold and high altitude conditions e.g. Denver 5500ft.
**Visible:** Can be used in low light as it has Fluorescent Dials and Datum Pointers. **Gangs Up:** Can link up (gang) 2 or more tools across undulating surfaces. **Permanence:** Can remain fix in position until fixing is stable for example up to 24 hours.
**Universal:** Fits most composite fixings including those of the invention and others.
**Reusable:** Tool is **Jig & Tool** with a target 10 year life cycle under harsh conditions. It is **not a disposable item.**

**The tool has seven key substrate mounting options.**

The object being to secure a firm base for positioning and executing the installation of the fixing.

**Vacuum:** It will attach to most substrates using a 'toggled on' silicone vacuum cup.

**Adhesive Tape:** When the substrate is porous or uneven it can be fixed with double sided tape.

**Magnets:** When required its internal Neodymium magnets fix to steel structures.

**Screws & Bolts:** When required it may be bolted or screwed to a substrate or a jig.

**Articulated:** to attach to adjacent or uneven surfaces such as inverted onto a ceiling in order to install a fixing on top of wall.

**Increasing Vacuum:** by attaching two more Vacuum Cups using attachment points.

**'Linked'** via **Tie Rods:** to adjacent installation tools to improve speed and accuracy.

Although described in use to locate the fixing itself, the locating tool for locating and mounting the fixings can also be used to locate and apply the moulding clamp of Figures 18 and 19 so that the moulded mounting surface formed by the moulding clamp is in the desired position. The action of the tool is the same in this case, though a modified holder is required to hold the moulding clamp.

The invention is not intended to be restricted to the details of the above described embodiments. For instance the polymer injection moulding 7, the polymer extension and the moulded polymeric extension can be moulded of material incorporating chopped fibre reinforcement. The moulded parts can be subjected to plasma etching to expose fibres and form clean recesses for better adhesion with the adhesive or indeed where the base fixing-members are moulded into the one fixed pars.

For example referring to Figure 56, in a further embodiment of the invention, the fixing is the same as that of Figure 24, except that the base member 422a is formed of moulded thermoplastic and has milled short length (e.g. 1 to 12mm) fibres 423a moulded into it. After moulding, the base 422a has been plasma etched to expose parts of the fibres 423a so that the ends of the fibres project from the surface of the base member. In this case this is on the underside of the base member and on the top side of the base member. This means that when the base member 422a is adhered to the substrate, the projecting fibres project into the adhesive 425a, which increases the bonding strength between the base and the substrate. On the upper surface, the projecting fibres project into the moulded base extension 430a. When the polymeric material of the extension 430a, or the adhesive 425a sets around the projecting ends of the fibres, this helps to increase the strength of the bond.

This method can be enhanced further by applying an electrostatic charge to the base member 422a, for example using a DC cell 426a arranged to provide a potential difference between the base member and ground. The electrostatic charge produces a mutual repulsion between the projecting fibre ends and the base, and between adjacent fibre ends. This tends to cause the fibres to stand up vertically, i.e. perpendicular to the surface of the base member. This charge is maintained as the adhesive or polymeric moulding is caused to flow over the surface of the base member and as it cures, which holds the fibres in the generally upstanding position, thereby increasing the distance that the fibres project into the polymeric material or adhesive thereby further enhancing the bond strength.

This method can also be applied in the over-moulding process shown in Figures 18 and 19. In that case either the base 305 of the core may be of moulded thermoplastic or thermoset material with fibres projecting from it, so that it is more fully bonded to the extension 342 or the substrate, or the extension 342 may have fibres projecting from it so that it is more fully bonded to the over-moulded composite layer 350. Again application of an electrostatic charge can be used to encourage projection of the ends of those fibres during the setting of the over-moulding.

Whilst the central stop and additional stop ridges determine the dimension equivalent to dimension C in Figure 5, the extent of the concavity in the direction of the stem and the thickness of the adhesive in the base, we anticipate that we may supply the product with these features oversize, to allow a customer to grind or press them to a dimension to suit his application and adhesive used.

Further, where the adhesive has low viscosity, it may flow too readily the margin apertures. Accordingly, we envisage that the apertures may be throttled, i.e. given a flow cross-section, considerably smaller than that shown in the drawings, in which the orifices spread only slightly beyond the area of the apertures. The throttling may indeed be as much as to an order of magnitude less in area of the apertures to that of the orifices at that fullest extent.

## Claims

1. A fixing member comprising a base (265, 305) for adhering to a substrate and a fixing formation (264, 304) projecting from the top of the base, and a plurality of reinforcing filaments (294, 341, 432), wherein the reinforcing filaments are incorporated in the base and extend beyond at least one edge of the base.

2. A fixing member according to claim 1 wherein the reinforcing filaments (294, 341, 432) form a reinforcement sheet.

3. A fixing member according to claim 1 wherein the reinforcing filaments (294, 341, 432) extend axially along the fixing formation and radially out through the base.

4. A fixing member according to any preceding claim wherein the base (265, 305) comprises a rigid base member having recesses formed in its surface.

5. A fixing member according to claim 4 wherein parts of the reinforcing filaments (294, 341, 432) are located within the recesses.

6. A fixing member according to any preceding claim wherein the reinforcing filaments (294, 341, 432) are held in place in the recesses by a cured retaining material.

7. A fixing member according to any one of claims 1 to 6 wherein the reinforcing filaments (432) are substantially straight extending parallel to each other and form a sheet of reinforcing material with an aperture therethrough where the filaments around the aperture follow a curved path around the aperture.

8. A fixing member according to claim 7 wherein the reinforcing material further comprises a binder or thread holding the filaments in position.

9. A fixing member according to claim 8 wherein the binder or thread is thermoplastic whereby the binder can be heated to allow relative movement of the filaments (432) to form the aperture.

10. A fixing member according to any preceding claim, the base (265, 305) having a concavity in its underside for accommodating adhesive for adhering it to the substrate part in use; and at least one stop on its underside for stopping its approach to the substrate, whereby on application of the base to the substrate with the interposition of adhesive therebetween, the adhesive will spread to a thickness determined, when the stop is in contact with the substrate, by the depth of the concavity.

11. A fixing member according to any foregoing claim wherein the base has fibres embedded therein and the ends of the fibres project from the surface of the base.

12. A method of adhering a fixing to a substrate, the method comprising: providing a fixing member comprising: a base (265, 305); and a fixing formation (264, 304) on a top side of the base, and a plurality of reinforcing filaments (294, 341, 432), wherein the reinforcing filaments are incorporated in the base and extend beyond at least one edge of the base, placing adhesive between the underside of the base and the substrate, and curing the adhesive.

13. A method according to claim 12 wherein the reinforcing filaments comprise a sheet formed of a plurality of substantially straight filaments (432) extending parallel to each other, and having an aperture therethrough, the aperture being formed by pushing a prong through the material so that the filaments are pushed aside to follow a curved path around the aperture.

14. A method according to claim 12 or 13 wherein the reinforcing filaments comprise one or more layers which are interleaved with a surrounding laminate of the substrate.

## Patentansprüche

1. Befestigungselement, umfassend eine Basis (265, 305) zum Kleben an ein Substrat und eine Befestigungsformation (264, 304), die von der Oberseite der Basis vorsteht, und eine Mehrzahl von Verstärkungsfasern (294, 341, 432), wobei die Verstärkungsfasern in die Basis eingegliedert sind und sich über mindestens eine Kante der Basis hinaus erstrecken.

2. Befestigungselement nach Anspruch 1, wobei die Verstärkungsfasern (294, 341, 432) eine Verstärkungsplatte bilden.

3. Befestigungselement nach Anspruch 1, wobei die Verstärkungsfasern (294, 341, 432) sich axial entlang der Befestigungsformation und radial nach außen durch die Basis erstrecken.

4. Befestigungselement nach einem vorhergehenden Anspruch, wobei die Basis (265, 305) ein starres Basiselement umfasst, das in seiner Oberfläche gebildete Aussparungen aufweist.

5. Befestigungselement nach Anspruch 4, wobei Teile der Verstärkungsfasern (294, 341, 432) in den Aussparungen angeordnet sind.

6. Befestigungselement nach einem vorhergehenden Anspruch, wobei die Verstärkungsfasern (294, 341, 432) in den Aussparungen durch ein ausgehärtetes Haltematerial in Position gehalten werden.

7. Befestigungselement nach einem der Ansprüche 1 bis 6, wobei die Verstärkungsfasern (432) im Wesentlichen gerade sind, sich parallel zueinander erstrecken und eine Platte aus Verstärkungsmaterial mit einer Öffnung hindurch bilden, wobei die Fasern um die Öffnung einem gekrümmten Weg um die Öffnung herum folgen.

8. Befestigungselement nach Anspruch 7, wobei das Verstärkungsmaterial ferner einen Binder oder Strang umfasst, der die Fasern in Position hält.

9. Befestigungselement nach Anspruch 8, wobei der Binder oder Strang thermoplastisch ist, sodass der Binder erwärmt werden kann, um eine relative Bewegung der Fasern (432) zum Bilden der Öffnung zu gestatten.

10. Befestigungselement nach einem vorhergehenden Anspruch, wobei die Basis einen Hohlraum (265, 305) in ihrer Unterseite zum Beherbergen von Klebstoff aufweist, um sie im Gebrauch an den Substratteil zu kleben; und mindestens einen Anschlag an ihrer Unterseite zum Stoppen ihrer Annäherung an das Substrat, sodass bei Aufbringung der Basis auf das Substrat mit der Zwischenanordnung von Klebstoff dazwischen sich der Klebstoff zu einer Dicke ausbreitet die durch die Tiefe des Hohlraums, wenn der Anschlag mit dem Substrat in Kontakt steht, festgelegt ist.

11. Befestigungselement nach einem vorhergehenden Anspruch, wobei die Basis darin eingebettete Fasern aufweist und die Enden der Fasern von der Oberfläche der Basis vorstehen.

12. Verfahren zum Kleben eines Befestigungssystems an ein Substrat, wobei das Verfahren umfasst: Bereitstellen eines Befestigungselements, umfassend: eine Basis (265, 305), und eine Befestigungsformation (264, 304) an einer Oberseite der Basis und eine Mehrzahl von Verstärkungsfasern (294, 341, 432), wobei die Verstärkungsfasern in die Basis eingegliedert sind und sich über mindestens eine Kante der Basis hinaus erstrecken; Anbringen von Klebstoff zwischen der Unterseite der Basis und dem Substrat; und Aushärten des Klebstoffs.

13. Verfahren nach Anspruch 12, wobei die Verstärkungsfasern eine Platte umfassen, die aus einer Mehrzahl von im Wesentlichen geraden Fasern (432) gebildet ist, die sich parallel zueinander erstrecken, und eine Öffnung hindurch aufweist, wobei die Öffnung durch Schieben einer Zinke durch das Material gebildet wird, sodass die Fasern zur Seite geschoben werden, um einem gekrümmten Weg um die Öffnung herum zu folgen.

14. Verfahren nach Anspruch 12 oder 13, wobei die Verstärkungsfasern eine oder mehrere Schichten umfassen, die mit einem umgebenden Laminat des Substrats verwoben sind.

## Revendications

1. Élément de fixation comprenant une base (265, 305) pour adhérer à un substrat et une formation de fixation (264, 304) se projetant à partir de la partie supérieure de la base, et une pluralité de filaments de renforcement (294, 341, 432), les filaments de renforcement étant incorporés dans la base et s'étendant au-delà d'au moins un bord de la base.

2. Élément de fixation selon la revendication 1, dans lequel les filaments de renforcement (294, 341, 432) forment une feuille de renforcement.

3. Élément de fixation selon la revendication 1, dans lequel les filaments de renforcement (294, 341, 432) s'étendent axialement le long de la formation de fixation et radialement à l'extérieur à travers la base.

4. Élément de fixation selon l'une quelconque des revendications précédentes, dans lequel la base (265, 305) comprend un élément de base rigide ayant des évidements formés dans sa surface.

5. Élément de fixation selon la revendication 4, dans lequel des parties des filaments de renforcement (294, 341, 432) sont situées à l'intérieur des évidements.

6. Élément de fixation selon l'une quelconque des revendications précédentes, dans lequel les filaments de renforcement (294, 341, 432) sont maintenus en place dans les évidements par un matériau de retenue qui a pris.

7. Élément de fixation selon l'une quelconque des revendications 1 à 6, dans lequel les filaments de renforcement (432) sont sensiblement rectilignes, s'étendant parallèlement les uns aux autres, et forment une feuille de matériau de renforcement avec une ouverture à travers celle-ci, les filaments autour de l'ouverture suivant une trajectoire courbe autour de l'ouverture.

8. Élément de fixation selon la revendication 7, dans lequel le matériau de renforcement comprend en outre un liant ou filetage maintenant les filaments en position.

9. Élément de fixation selon la revendication 8, dans lequel le liant ou filetage est thermoplastique, ce par quoi le liant peut être chauffé pour autoriser un mouvement relatif des filaments (432) pour former l'ouverture.

10. Élément de fixation selon l'une quelconque des revendications précédentes, la base (265, 305) ayant une concavité sur son côté inférieur pour recevoir de l'adhésif pour le faire adhérer à la partie de substrat en utilisation ; et au moins une butée sur son côté inférieur pour arrêter son approche vers le substrat ; ce par quoi, lors de l'application de la base sur le substrat avec l'interposition de l'adhésif entre eux, l'adhésif s'étalera à une épaisseur déterminée, lorsque la butée est en contact avec le substrat, par la profondeur de la concavité.

11. Élément de fixation selon l'une quelconque des revendications précédentes, dans lequel la base a des fibres intégrées à l'intérieur de celle-ci et les extrémités des fibres se projettent à partir de la surface de la base.

12. Procédé pour faire adhérer une fixation à un substrat, le procédé comprenant : fournir un élément de fixation comprenant : une base (265, 305) ; et une formation de fixation (264, 304) sur un côté supérieur de la base, et une pluralité de filaments de renforcement (294, 341, 432), les filaments de renforcement étant incorporés dans la base et s'étendant au-delà d'au moins un bord de la base, placer de l'adhésif entre le côté inférieur de la base et le substrat, et faire prendre l'adhésif.

13. Procédé selon la revendication 12, dans lequel les filaments de renforcement comprennent une feuille formée d'une pluralité de filaments sensiblement rectilignes (432) s'étendant parallèlement les uns aux autres, et ayant une ouverture à travers celle-ci, l'ouverture étant formée par poussée d'une broche à travers le matériau de telle sorte que les filaments sont écartés pour suivre une trajectoire courbe autour de l'ouverture.

14. Procédé selon la revendication 12 ou 13, dans lequel les filaments de renforcement comprennent une ou plusieurs couches qui sont intercalées avec un stratifié, qui les entoure, du substrat.
